# EUROPEAN PATENT SPECIFICATION

(11) **EP 4 439 381 B1**
(45) Date of publication and mention of the grant of the patent: **28.01.2026**
(21) Application number: 24165824.4
(22) Date of filing: 25.03.2024
(51) Int. Cl.: G06K 7/10, G01N 35/00

(54) **SAMPLE MEASURING APPARATUS, INFORMATION READING APPARATUS, AND INFORMATION READING METHOD**
PROBENMESSVORRICHTUNG, INFORMATIONSLESEVORRICHTUNG UND INFORMATIONSLESEVERFAHREN
APPAREIL DE MESURE D'ÉCHANTILLON, APPAREIL DE LECTURE D'INFORMATIONS ET PROCÉDÉ DE LECTURE D'INFORMATIONS

(30) Priority: 29.03.2023 JP 2023053837
(43) Date of publication of application: 02.10.2024
(73) Proprietor: SYSMEX CORPORATION, Kobe-shi Hyogo 651-0073 (JP)
(72) Inventor: HAYASHI, Masato, Kobe-shi, Hyogo, 651-0073 (JP); TAKENAKA, Rentaro, Kobe-shi, Hyogo, 651-0073 (JP)
(74) Representative: Becker Kurig & Partner Patentanwälte mbB

(56) References cited:
- EP-A1- 3 460 484
- US-A1- 2015 347 799
- US-A1- 2016 328 588

## Description

### TECHNICAL FIELD

The present invention relates to a sample measuring apparatus, an information reading apparatus, and an information reading method.

### BACKGROUND ART

Patent Literature 1 discloses a sample measuring apparatus including a container holder, a barcode reader for reading a barcode label of the container holder, and means for automatically adjusting a focal range of the barcode reader according to a distance between the container holder and the barcode reader. Patent Literature 1 describes that the position of each container holder is detected to automatically adjust the focus range of a barcode reader, and that a barcode label may be read by adjusting the focus range.

Patent Document 1: Japanese Patent Application Publication No. H8-292194
US 2016/328588 A1 discusses systems for reading machine-readable labels, for example, two-dimensional barcodes, that include a housing, a reader configured to read the machine-readable labels on sample receptacles as a sample rack holding the sample receptacles move between a first position and a second position within the housing.

### SUMMARY

In the apparatus of Patent Document 1, as described above, the focal range of the barcode reader is automatically adjusted according to the distance between the barcode reader and the container holder. For this reason, a motor and a power transmission member constituting an adjustment mechanism for automatically adjusting the focal range, and a sensor, a control circuit, and the like for controlling the operation of the motor and the power transmission member are required, which increases the apparatus cost.

The invention is solely defined by the appended claims. Embodiments not fully falling under the scope of the appended claims are to be merely considered as examples useful for understanding the invention.

According to sample measuring apparatus of the present invention, it is possible to read the identification information without automatically adjusting the focal range of the identification information reader for a plurality of objects having different geometric distances from the identification information reader. Therefore, a mechanical component or an electronic component for automatically adjusting the focal range is not required, and the apparatus cost may be reduced.

### BRIEF DESCRIPTION OF DRAWINGS

FIG. 1 is a diagram illustrating an external appearance of a sample measuring apparatus.
FIG. 2 is a diagram illustrating an internal configuration of sample measuring apparatus.
FIG. 3 is a diagram illustrating a state in which a sample rack tray is pulled out from a housing.
FIG. 4 is a diagram illustrating a state in which reagent rack tray is pulled out from a housing.
FIG. 5 is a diagram illustrating an external appearance of a measuring unit.
FIG. 6 is a diagram illustrating an internal structure of a measuring unit.
FIG. 7 is a diagram illustrating an arrangement of a detecting unit.
FIG. 8 is a block diagram illustrating a control of sample measuring apparatus.
FIG. 9 is a diagram illustrating a configuration of a dispensing device.
FIG. 10 is a diagram illustrating a configuration of a container holder.
FIG. 11 is a diagram illustrating a configuration of a sample rack tray and a sample rack.
FIG. 12 is a diagram illustrating a state in which a sample rack tray is accommodated in sample rack storage.
FIG. 13 is a diagram illustrating a state in which a sample rack tray is accommodated in sample rack storage.
FIG. 14 is a diagram illustrating a state in which a sample rack tray is pulled out from sample rack storage.
FIG. 15 is a diagram illustrating a state in which a sample rack tray is pulled out from sample rack storage.
FIG. 16 is a diagram illustrating a reagent rack tray on which a reagent rack is placed.
FIG. 17 is a flowchart illustrating a process of performing sample measurement.
FIG. 18 is a diagram illustrating a light irradiation area in an information reading apparatus, a flection unit, and a rack installation part.
FIG. 19 is a diagram illustrating a front view of an information reading apparatus.
FIG. 20 is a diagram illustrating a state in which an identification information of sample container accommodated in a first sample rack is read.
FIG. 21 is a diagram illustrating a state in which an identification information of sample container accommodated in a second sample rack is read.
FIGS. 22A and 22B are diagrams illustrating an image of identification information of sample container acquired by an information reading apparatus.
FIG. 23 is a diagram illustrating a state in which an identification information of reagent container stored in a first reagent rack is read.
FIG. 24 is a diagram illustrating a state in which the identification information of reagent container stored in a second reagent rack is read.
FIGS. 25A and 25B are diagrams illustrating an image of identification information of reagent container acquired by the information reading apparatus.
FIG. 26 is a diagram illustrating a modification of a first flection unit.
FIG. 27 is a flowchart illustrating a sample ID reading process.
FIG. 28 is a flowchart illustrating a reagent ID reading process.
FIG. 29 is a diagram illustrating an information reading apparatus and a second flection unit, and is a diagram illustrating a state in which identification information of an object placed outside a device is read.
FIG. 30 is a diagram illustrating a structure of a second flection unit, and is a diagram illustrating a state in which the movable plate is closed.
FIG. 31 is a diagram illustrating a structure of a second flection unit, and is a diagram illustrating a state in which a movable plate is opened.

### DETAILED DESCRIPTION

Hereinafter, embodiments of a sample measuring apparatus, an information reading apparatus, and an information reading method according to the present invention are described in detail with reference to the drawings.

### < Sample measuring apparatus >

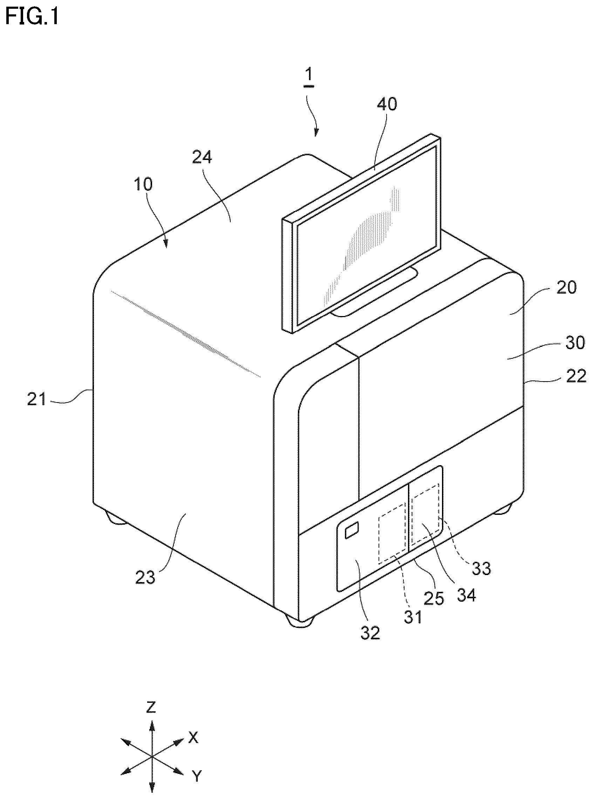

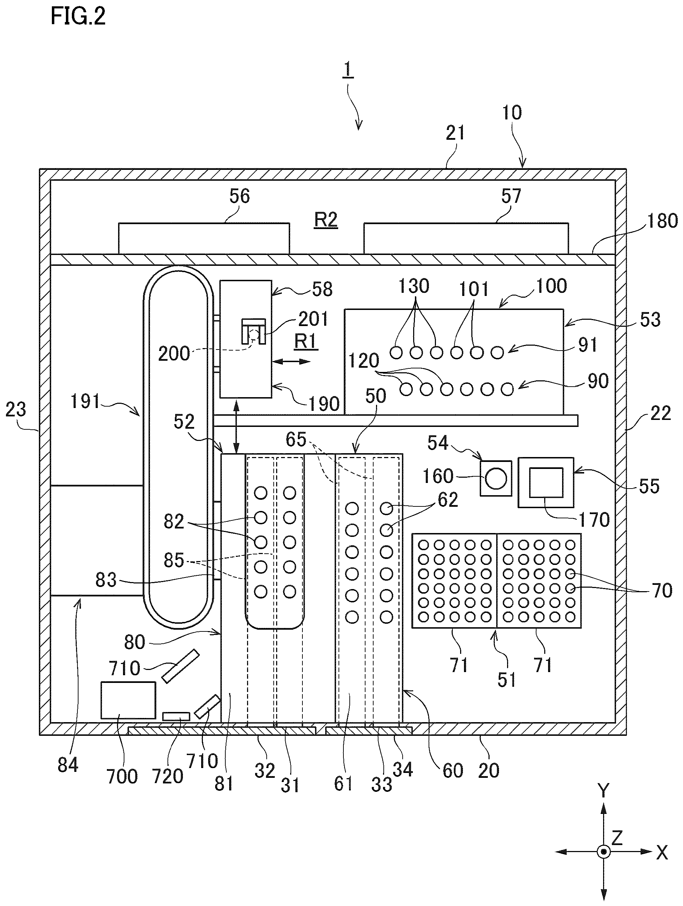

FIG. 1 is a diagram illustrating a perspective view of an external appearance of a sample measuring apparatus 1 according to the present embodiment. FIG. 2 is a diagram illustrating a plan view of an example of an internal configuration of the sample measuring apparatus 1. In an embodiment, sample measuring apparatus 1 is used for blood coagulation measurement for analyzing the activity of coagulation factor in sample (blood sample).

As shown in FIG. 1, sample measuring apparatus 1 includes a substantially rectangular parallelepiped housing (apparatus housing) 10. The housing 10 includes the front surface 20, the rear surface 21, the right side surface 22, the left side surface 23, the upper surface 24, and the bottom surface 25. In the specification, "left" and "right" of the sample measuring apparatus 1 is based on directions when the front surface 20 is viewed from the front.

The front surface 20 is provided with an openable and closable housing 30, and a user can access the inside of the housing 10 by opening the housing 30. The front surface 20 is provided with the opening 31 for loading and unloading the reagent rack tray 85 into and from the reagent rack storage 52 described later, and the lid 32 for opening and closing the opening 31. The front surface 20 is provided with the opening 33 through which the sample rack tray 65 is inserted into and removed from the sample rack storage 50 described later, and a lid 34 that opens and closes the opening 33. The lid 34 is configured to close the opening 33 by being biased toward the housing 10 by a spring and to open the opening 33 by an external force acting against the bias.

The upper surface 24 is a rectangular flat surface, and the monitor 40 is installed thereon. The monitor 40 is a touch panel type display, and displays inputs for operations necessary for sample measurement, display various kinds of information, and display result information of sample measurement.

As shown in FIG. 2, the sample measuring apparatus 1 includes the sample rack storage 50, the reaction container storage 51, the reagent rack storage 52, the measuring unit 53, the cleaning unit 54, the disposal unit 55, the power supply unit 56, the controller 57, and the dispenser 58. The sample measuring apparatus 1 further includes the information reading apparatus 700 that reads identification information of a first object placed in sample rack storage 50 and identification information of a second object placed in the reagent rack storage 52, a first flection unit 710, and a second flection unit 720.

Sample rack storage 50 is provided closer to the front surface 20 than the center of the housing 10 in the front-rear direction Y and near the center of the housing 10 in the left-right direction X. the sample rack storage 50 houses a sample rack that holds a plurality of sample container. sample rack storage 50 is covered with the housing member 60. The housing member 60 has an upper surface 61, and a plurality of dispensing holes 62 are formed in the upper surface 61. A plurality of (six in FIG. 2) dispensing holes 62 are arranged side by side on a straight line in the front-rear direction Y. The dispensing holes 62 are arranged in two rows adjacent to each other in the left-right direction X. A pipette 200 (described later) of the dispenser 58 can enter sample rack storage 50 through the dispensing hole 62 and aspirate sample stored in sample container in sample rack storage 50.

Sample rack storage 50 stores the sample rack tray 65 on which sample rack is installed. Two sample rack trays 65 are arranged side by side so as to be adjacent to each other in the left-right direction X in sample rack storage 50. That is, the sample rack storage 50 has a space in which two sample rack trays 65 can be arranged in the left-right direction X. As will be described in detail later, sample rack storage 50 includes an electric drive mechanism that moves sample rack trays 65 in the front-rear direction Y, and is configured to be able to independently insert and remove the two sample rack trays 65 based on a user's operation on the monitor 40.

In the present embodiment, the first object whose identification information is read by the information reading apparatus 700 is a reagent container held in a reagent rack, and the first setting part in which the first object is installed is the reagent rack tray 85. The second objects whose identification information is read by the information reading apparatus 700 are sample container held in sample rack and sample rack, and the second placement portion where the second objects are placed is the reagent rack tray 85. The first and second setting part mean places used for installing objects, and are not limited to the sample rack tray 65 and the reagent rack tray 85.

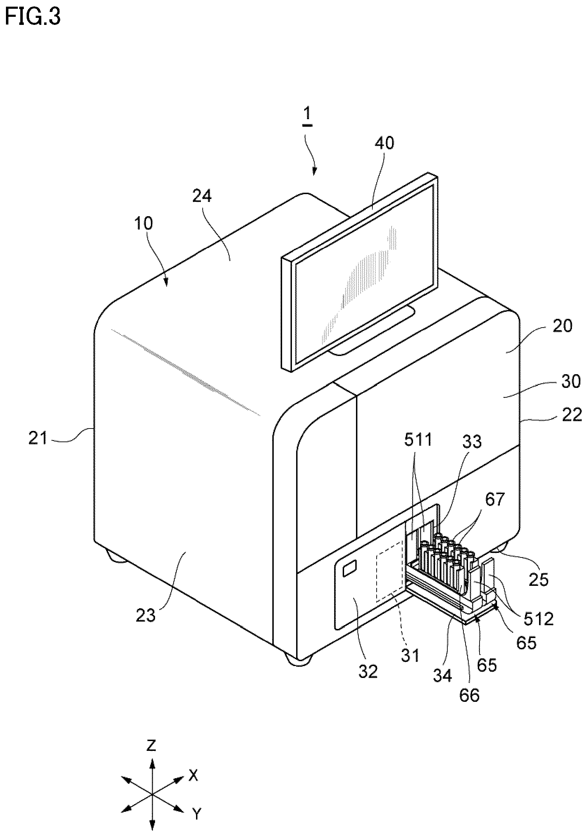

FIG. 3 is a diagram illustrating a state in which the sample rack tray 65 is pulled out from the housing 10. As shown in FIG. 3, the sample rack tray 65 can be pulled out of the housing 10 through an opening 33 that is opened and closed by a lid 34. When the sample rack tray 65 is pulled out of the housing 10, the lid 34 is pushed by the sample rack tray 65 to open against the urging force. When the sample rack tray 65 is stored in the housing 10, the lid 34 is closed by the urging force. Thus, the lid 34 can open and close the opening 33 in conjunction with the movement of the sample rack tray 65.

The sample rack tray 65 has an elongated substantially rectangular shape in a plan view, and is placed such that the length direction thereof is along the front-rear direction Y. In the sample rack tray 65, the rear light-shielding wall 511 is provided at a first end portion in the length direction of the tray positioned on the rear side of the housing 10, and the front light-shielding wall 512 is provided at a second end portion in the length direction of the tray positioned on the front side of the housing 10. In the present embodiment, one of the sample rack 66 is placed on one of the sample rack tray 65. The sample rack 66 has an elongated substantially rectangular shape in a plan view, and is placed on the sample rack tray 65 such that the length direction thereof is along the front-rear direction Y. The sample rack 66 has a structure capable of holding a plurality of the sample container 67 such that the plurality of the sample container 67 are arranged in a line (front-rear direction Y).

As shown in FIG. 2, the reaction container storage 51 is provided on the front surface 20 side with respect to the center of the housing 10 in the front-rear direction Y and on the right side with respect to the center of the housing 10 in the left-right direction X. The reaction container storage 51 stores the container rack 71 holding reaction containers 70.

The reagent rack storage 52 is provided on the front surface 20 side with respect to the center of the housing 10 in the front-rear direction Y and on the left side with respect to the center of the housing 10 in the left-right direction X. The reagent rack storage 52 is provided on the left side of the sample rack storage 50. The reagent rack storage 52 stores a reagent rack holding a plurality of reagent container. The reagent rack storage 52 is covered with housing member 80. Housing member 80 has an upper surface 81, and a plurality of dispensing holes 82 are formed in the upper surface 81. A pipette 200 (to be described later) of the dispenser 58 can enter the reagent rack storage 52 through the dispensing hole 82 and aspirate reagent housed in reagent container in the reagent rack storage 52. The reagent rack storage 52 includes a cooling unit 83 for cooling reagent container, and a heat exhaust unit 84 for exhausting heat generated by the cooling unit 83 to the outside of the housing 10.

The reagent rack tray 85 on which a reagent rack can be placed is installed in the reagent rack storage 52. Two reagent rack trays 85 are arranged side by side so as to be adjacent to each other in the left-right direction X in the reagent rack storage 52. That is, the reagent rack storage 52 has a space in which two reagent rack trays 85 can be arranged in the left-right direction X. The reagent rack storage 52 may include an electric drive mechanism that moves the reagent rack tray 85 in the front-rear direction Y. However, in the present embodiment, the user inserts the reagent rack tray 85 into the reagent rack storage 52 and pulls out the reagent rack tray 85 from the reagent rack storage 52, so that the reagent rack tray 85 can be taken in and out. The two reagent rack trays 85 can be taken in and out independently of each other.

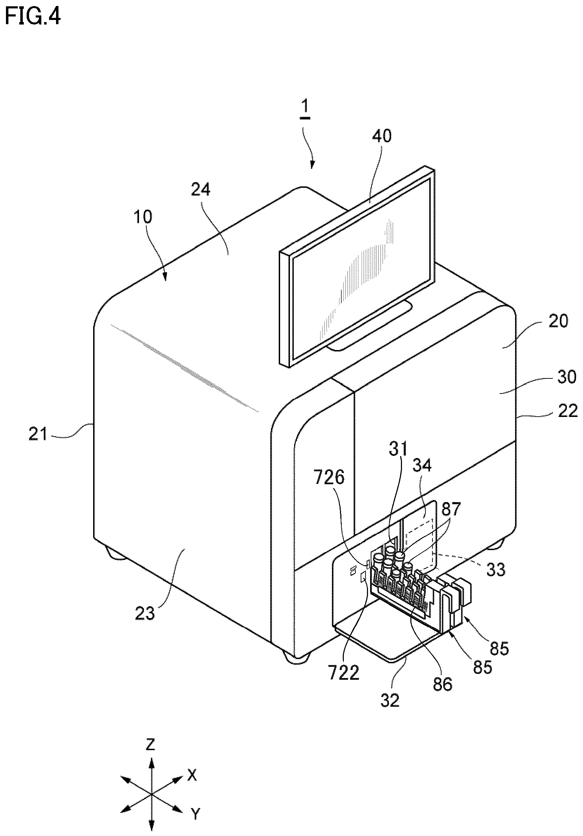

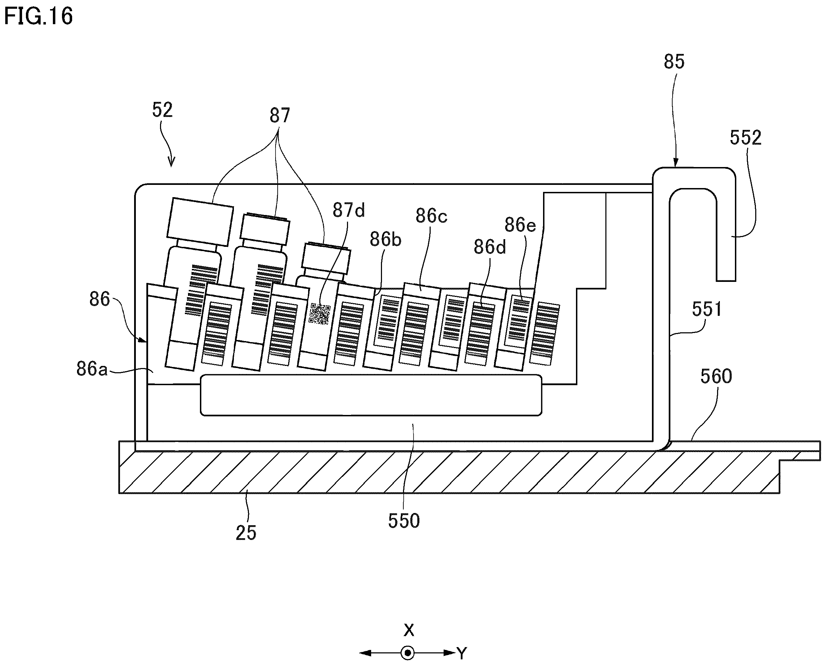

FIG. 4 shows a state in which the reagent rack tray 85 is pulled out from the housing 10. As shown in FIG. 4, the reagent rack tray 85 can be pulled out of the housing 10 through the opening 31 that is opened and closed by the lid 32. The lid 34 is manually opened and closed. The reagent rack tray 85 has an elongated substantially rectangular shape in a plan view, and is placed such that the length direction thereof is along the front-rear direction Y. The handle 552 (see FIG. 16 described later) is provided at the end portion of the reagent rack tray 85 in the length direction, and the handle 552 is placed to face the front of the housing 10. In the present embodiment, one of the reagent rack 86 is placed on one of the reagent rack tray 85. The reagent rack 86 has an elongated substantially rectangular shape in a plan view, and is placed on the reagent rack tray 85 such that the length direction thereof is along the front-rear direction Y. the reagent rack 86 has a structure capable of storing the plurality of the reagent container 87 such that the plurality of the reagent container 87 are arranged in a row (the front-rear direction Y).

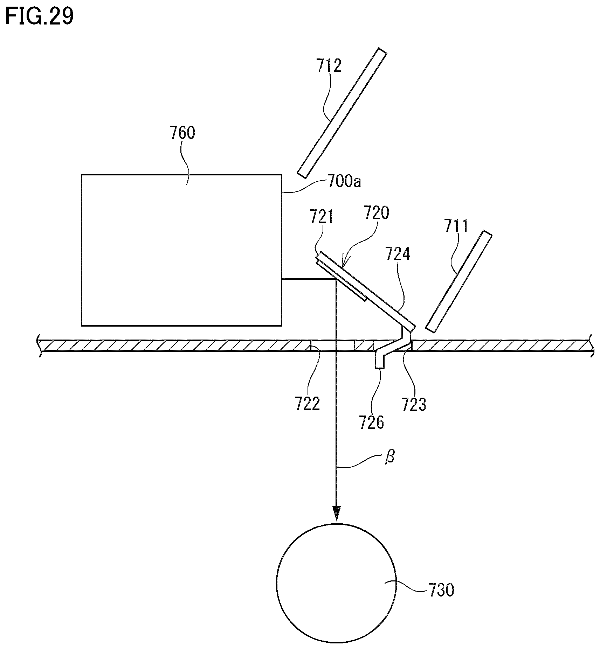

Although details will be described later, the opening 722 for guiding light of the information reading apparatus 700 to the outside of the device by the function of the second flection unit 720 is formed in the front surface 20 of the housing 10. Further, the front surface 20 is provided with the control lever 726 for operating the movable plate 724 (see FIG. 29 and the like to be described later) constituting the second flection unit 720. The opening 722 and the control lever 726 are arranged in a portion of the front surface 20 covered with the lid 32, and are exposed to the outside of the apparatus by opening the lid 32.

As illustrated in FIG. 2, the measuring unit 53 includes the heating unit 90 and the detecting unit 91. The heating unit 90 and the detector 91 are provided on the rear surface 21 side with respect to the center of the housing 10 in the front-rear direction Y and on the right side with respect to the center of the housing 10 in the left-right direction X.

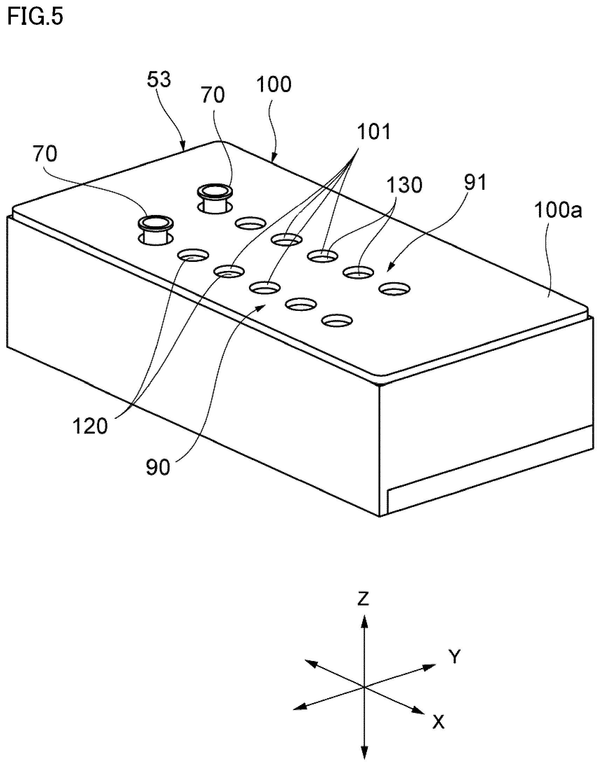

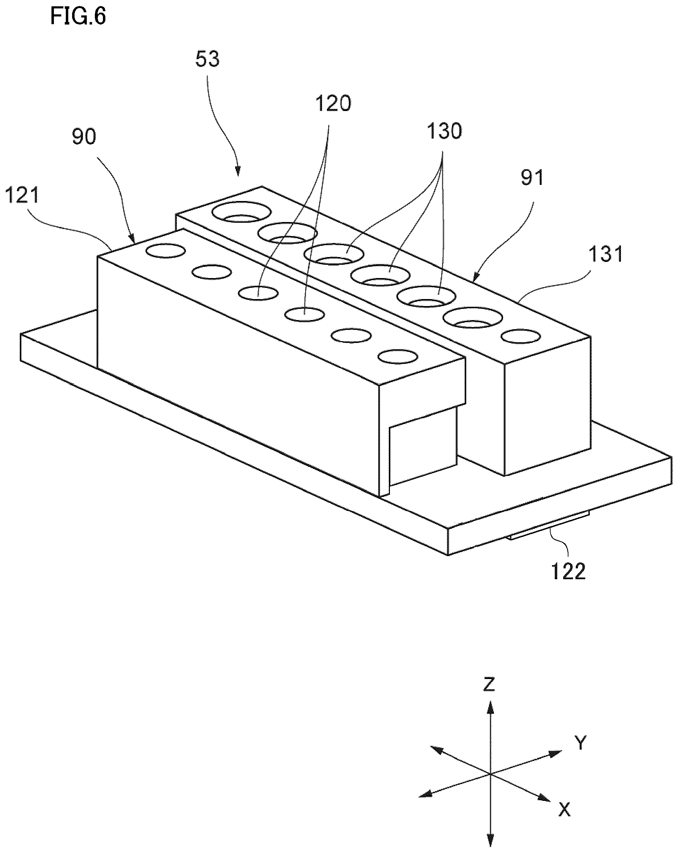

FIG. 5 is a diagram illustrating an appearance of the measuring unit 53, and FIG. 6 is a diagram illustrating an internal structure of the measuring unit 53. As illustrated in FIG. 5, the measuring unit 53 includes the housing member 100 including the heating unit 90 and the detecting unit 91. The housing member 100 has a substantially rectangular parallelepiped shape. The holes 101 are formed in the upper surface 100a of the housing member 100.

As illustrated in FIG. 6, the heating unit 90 includes the first holder 121 inside the housing member 100. The first holder 121 has a rectangular parallelepiped shape that is long in the left-right direction X. The first holder 121 includes holding holes 120 for retaining the reaction container 70. The holding holes 120 are arranged in a row in the left-right direction X. The holding hole 120 communicates with the hole 101 placed in the upper surface 100a of the housing member 100. The heating unit 90 can heat the reaction container 70 held in the holding hole 120 by the heat source 122.

The detector 91 includes the second holder 131 inside the housing member 100. The second holder 131 has a rectangular parallelepiped shape that is long in the left-right direction X. The second holder 131 includes a plurality of holding holes 130 for retaining the reaction container 70. The holding holes 130 are arranged in a row in the left-right direction X. The second holder 131 is provided on the rear surface 21 side of the first holder 121. The holding holes 130 are opened upward and communicates with the hole 101 formed in the upper surface 100a of the housing member 100 to receive and hold the reaction container 70. Since the holding hole 130 is opened upward as described above, light can enter the holding hole 130 from the outside of the housing member 100 and reach the detector 141 described later.

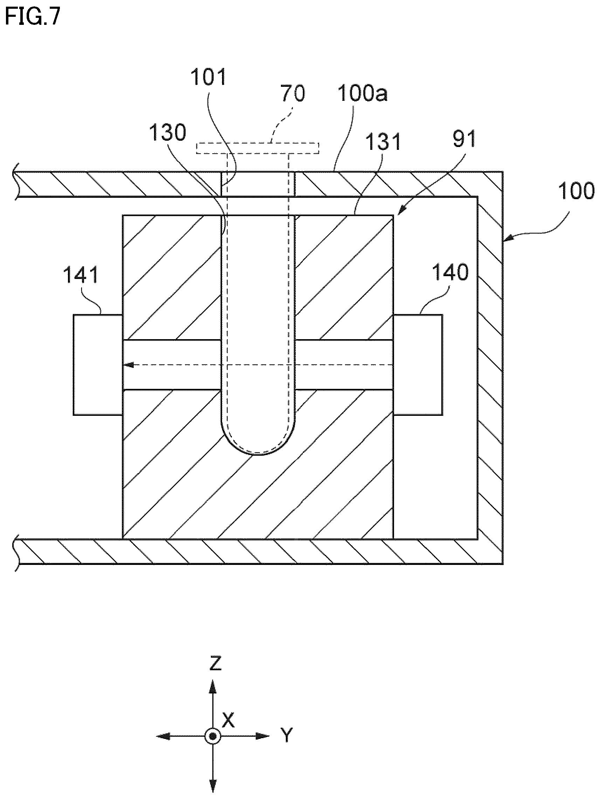

As illustrated in FIG. 7, the detector 91 includes the light source 140 that irradiates the reaction container 70 held by the second holder 131 with light, and the detector 141 that detect the light transmitted through the reaction container 70. The detector 91 irradiates sample in the reaction container 70 and a measurement specimen subjected to prepare from reagent with light from the light source 140, and the detector 141 performs detecting on the light transmitted through the measurement specimen, whereby optical information of the measurement specimen can be measured.

As shown in FIG. 2, the cleaning unit 54 is provided near the center of the housing 10 in the front-rear direction Y and between the measuring unit 53 and the reaction container storage 51. The cleaning unit 54 includes a cleaning tank 160 for cleaning the pipette 200 of the dispenser 58.

The disposal unit 55 is provided between the measuring unit 53 and the reaction container storage 51. The disposal unit 55 includes the disposal outlet 170 for disposing of the reaction container 70.

The power supply unit 56 is provided near the rear surface 21 of the housing 10 in the front-rear direction Y and on the left side of the center in the left-right direction X. The power supply unit 56 supplies power supplied from an external power supply to various devices such as the sample rack storage 50, the reagent rack storage 52, the measuring unit 53, the controller 57, and the dispenser 58.

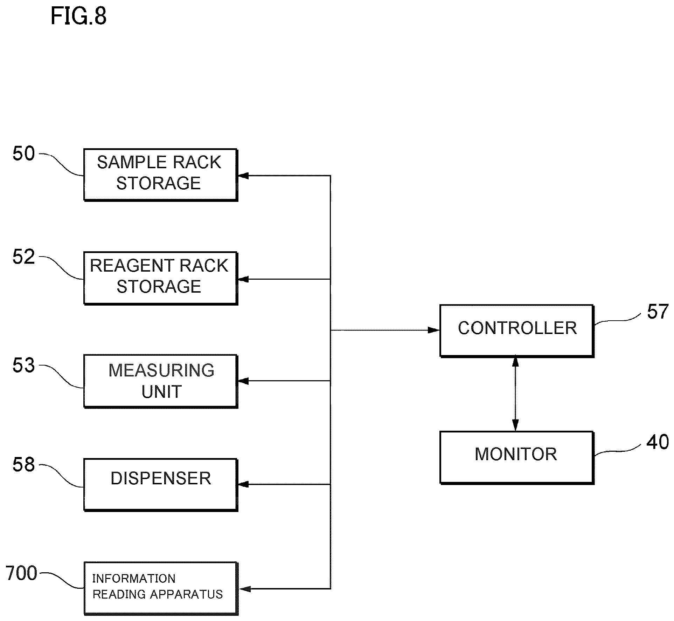

The controller 57 is provided near the rear surface 21 of the housing 10 in the front-rear direction Y and on the right side of the center in the left-right direction X. As illustrated in FIG. 8, the controller 57 can communicate with various devices such as the sample rack storage 50, the reagent rack storage 52, the measuring unit 53, the dispenser 58, and the information reading apparatus 700, and controls operations of the various devices. The controller 57 includes a memory and a CPU. The CPU executes a program stored in the memory to perform execute, thereby controlling various devices and performing execute for sample measurement. The controller 57 can communicate with the monitor 40, and can perform sample measurement based on the information input from the monitor 40 and display the result of the sample measurement on the monitor 40.

As shown in FIG. 2, the housing 10 includes therein the vertical wall 180 placed on the rear surface 21 side with respect to the center in the front-rear direction Y. The vertical wall 180 includes a plate shape whose plate surface is directed in the front-rear direction Y. The vertical wall 180 separates the inside of the housing 10 into a main region R1 and a rear region R2. The power supply unit 56 and the controller 57 are attached to a surface of the vertical wall 180 on the rear surface region R2 side. The sample rack storage 50, the reaction container storage 51, the reagent rack storage 52, the measuring unit 53, the cleaning unit 54, the disposal unit 55, the dispenser 58, and the information reading apparatus 700 are provided in the main region R1.

The dispenser 58 has a function of dispensing to the sample container 67, the reaction container 70, and the reagent container 87. The dispenser 58 includes the dispensing device 190 and the moving device 191 that moves the dispensing device 190. The moving device 191 is configured to transfer the entire dispensing device 190 at any position in the left-right direction X and the front-rear direction Y in the housing 10. The container holder 201 that is included in the dispensing device 190 may be moved in the housing 10 by the moving device 191.

### < Configuration of Dispenser 58 >

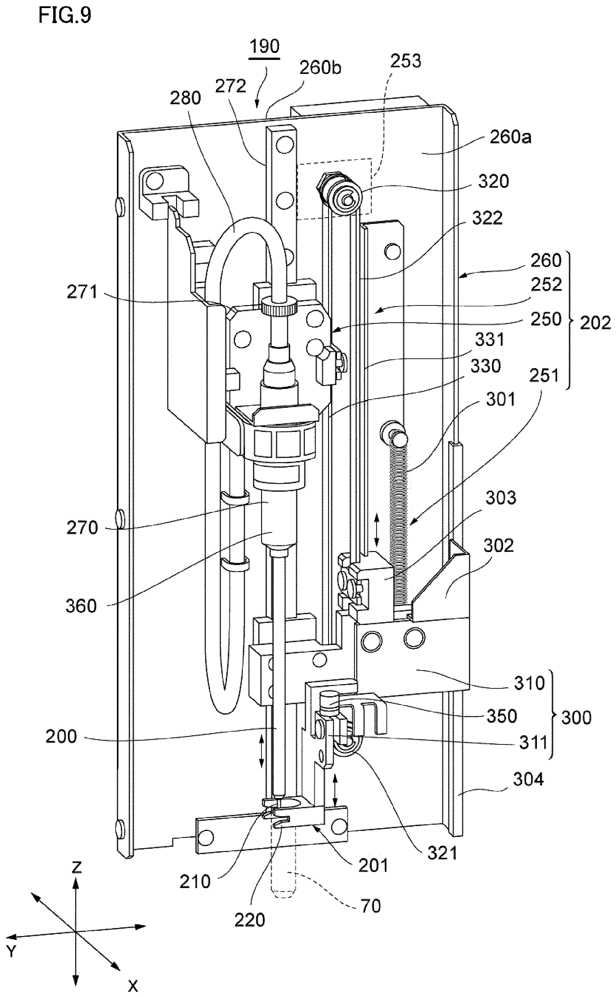

FIG. 9 is a diagram illustrating perspective view of an example of a configuration of the dispensing device 190. The dispensing device 190 includes the pipette 200, the container holder 201, the moving mechanism 202, and the like.

The pipette 200 is an elongated tube extending in the vertical direction Z, and can hold a predetermined amount of liquid in the tube. The pipette 200 is configured to suck a liquid from the tip 210 and perform discharge on the sucked liquid.

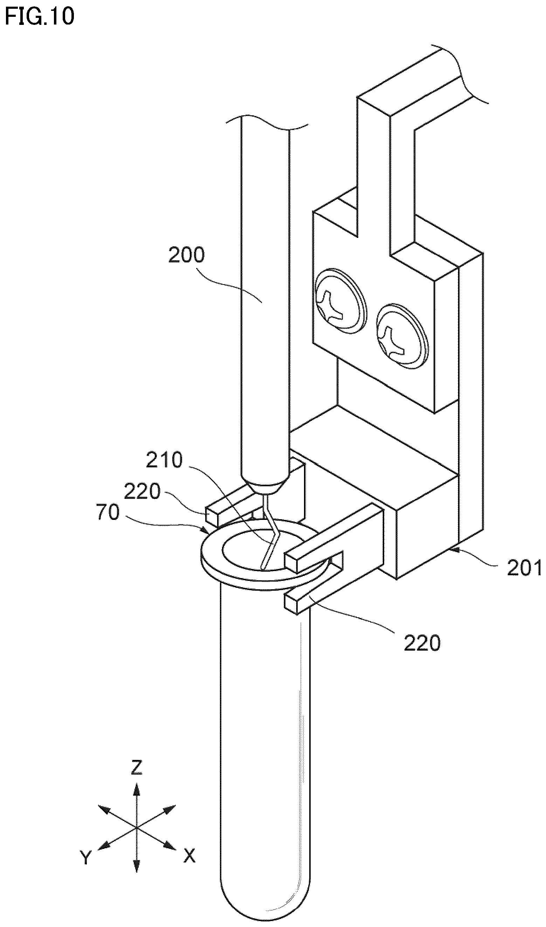

The container holder 201 includes two (a pair of) holding arms 220 that hold the reaction container 70 as shown in FIG. 10. The holding arm 220 is placed below the pipette 200 and can hold the reaction container 70 coaxially in the vertical direction Z of the pipette 200. The pipette 200 is narrower than the interval between the two holding arms 220 of the container holder 201, and can be inserted between the two holding arms 220 in the vertical direction Z.

As shown in FIG. 9, the moving mechanism 202 relatively moves the pipette 200 and the container holder 201 in the vertical direction Z in a state where the holding arm 220 and the pipette 200 are coaxially maintained.

The moving mechanism 202 has a mechanical mechanism configured such that when one of the pipette 200 and the container holder 201 is lifted, the other is lowered in conjunction therewith. When the pipette 200 is lowered, the container holder 201 is lifted in conjunction with the lowering of the pipette 200, and the container holder 201 is lifted to a predetermined position, the moving mechanism 202 is disconnected. Thus, the pipette 200 has a mechanical mechanism configured to descend in a state where the container holder 201 stops ascending. Hereinafter, an example of such a mechanical mechanism will be described.

The moving mechanism 202 includes the first moving unit 250 for moving the pipette 200 in the vertical direction Z, the second moving unit 251 for moving the container holder 201 in the vertical direction Z, the interlocking unit 252 for interlocking the first moving unit 250 and the second moving unit 251, and the drive source 253 for driving the interlocking unit 252.

The moving mechanism 202 includes a substantially rectangular plate-shaped member 260. The plate-shaped member 260 is erected so that the plate surface faces the left-right direction X. The first moving unit 250, the second moving unit 251, and the interlocking unit 252 are provided on the first plate surface 260a on the right side (front side in FIG. 9) in the left-right direction X of the plate-shaped member 260. The drive source 253 is provided on the second plate surface 260b on the left side (back surface side in FIG. 9) in the left-right direction X of the plate-shaped member 260.

The first moving unit 250 includes the pipette holding member 270 that holds the pipette 200, and the first lifting member 271 to which the pipette holding member 270 is fixed and which is lifted and lowered by the interlocking unit 252.

The pipe 280 for supplying and sucking air into the pipette 200 is connected to an upper portion of the pipette holding member 270. The pipe 280 communicates with the pump device.

The first lifting member 271 has a plate shape. The pipette holding member 270 is fixed to a plate surface on the right side in the left-right direction X of the first lifting member 271.

The first lifting member 271 is movably attached to the first guide rail 272 provided in the vertical direction Z of the plate-shaped member 260. The first lifting member 271 is attached to the belt 322 described later.

The second moving unit 251 includes the second lifting member 300 to which the container holder 201 is fixed and which can be lifted and lowered, the biasing member 301 which moves the second lifting member 300 upward, the stopper 302 which stops the lifting of the second lifting member 300, and the pressing member 303 which is lifted and lowered by the interlocking unit 252 and can press the second lifting member 300 downward.

The second lifting member 300 includes the main body 310 and the arm 311 connecting the main body 310 and the container holder 201.

The second lifting member 300 is movably attached to the second guide rail 304 provided in the vertical direction Z of the plate-shaped member 260.

The biasing member 301 is a spring and is oriented in the vertical direction Z. The biasing member 301 has an upper end fixed to a position above the second lifting member 300 of the plate-shaped member 260 and a lower end fixed to an upper portion of the second lifting member 300. The biasing member 301 biases the second lifting member 300 upward.

The stopper 302 is provided at a position above the second lifting member 300 of the plate-shaped member 260. The stopper 302 is provided so as to come into contact with an upper portion of the second lifting member 300 and stop the elevation of the second lifting member 300 when the second lifting member 300 is elevated to a predetermined upper limit position, that is, a predetermined position (position in FIGS. 9 and 10) where the pipette 200 is inserted into the reaction container 70 held by the holding arm 220 of the container holder 201.

The pressing member 303 is provided at a position above the second lifting member 300. The pressing member 303 is attached to the belt 322 to be described later, and is movable up and down by the belt 322. When the pressing member 303 is lowered, the pressing member 303 can press the second lifting member 300 downward, and can be lifted above the upper limit position of the second lifting member 300.

In the second moving unit 251, when the container holder 201 is lowered, the pressing member 303 is lowered by the interlocking unit 252 and the second lifting member 300 is pressed downward against the biasing force of the biasing member 301, and when the container holder 201 is lifted, the pressing member 303 is lifted by the interlocking unit 252 and the second lifting member 300 is lifted by the biasing force of the biasing member 301. When the container holder 201 moves up to a predetermined position, the stopper 302 stops the upward movement of the second lifting member 300.

The interlocking unit 252 includes a pair of the pulleys 320 and 321 arranged in the vertical direction Z and the annular belt 322 wound around the pair of the pulleys 320 and 321.

The pair of pulleys 320 and 321 are placed above and below the plate-shaped member 260. The pair of the pulleys 320 and 321 are provided between the first guide rail 272 of the first moving unit 250 and the second guide rail 304 of the second moving unit 251 in the front-rear direction Y. The pulley 320 is provided near an upper portion of the plate-shaped member 260, and the pulley 321 is provided near a lower portion of the plate-shaped member 260.

The belt 322 is wound around a pair of the pulleys 320 and 321, and the belt portions 330 and 331 facing each other in the front-rear direction Y move up and down in opposite directions via the pulleys 320 and 321.

The first moving unit 250 is driven by the belt portion 330. That is, the first lifting member 271 is attached to the belt portion 330, and the first lifting member 271, the pipette holding member 270, and the pipette 200 are lifted and lowered as the belt portion 330 is lifted and lowered.

The second moving unit 251 is driven by the belt portion 331. That is, the pressing member 303 is attached to the belt portion 331, and the pressing member 303 moves up and down as the belt portion 331 moves up and down. As the pressing member 303 moves up and down, the second lifting member 300 and the container holder 201 may move up and down.

The drive source 253 is a single motor and is connected to the pulley 320. The drive source 253 is fixed to a second plate surface 260b on the left side in the left-right direction X of the plate-shaped member 260. The drive source 253 may switch between forward rotation and reverse rotation, and can rotate the belt 322 clockwise and counterclockwise via the pulley 320.

The moving mechanism 202 includes the vibrating member 350 that vibrates the reaction container 70 held by the container holder 201. The vibrating member 350 includes a vibration element that vibrates by power supply, and is provided on the arm 311 of the second lifting member 300.

The moving mechanism 202 includes the heating member 360 that heats sample or reagent of the pipette 200. The heating member 360 is a heating element that generates heat by power supply, and is provided in the pipette holding member 270.

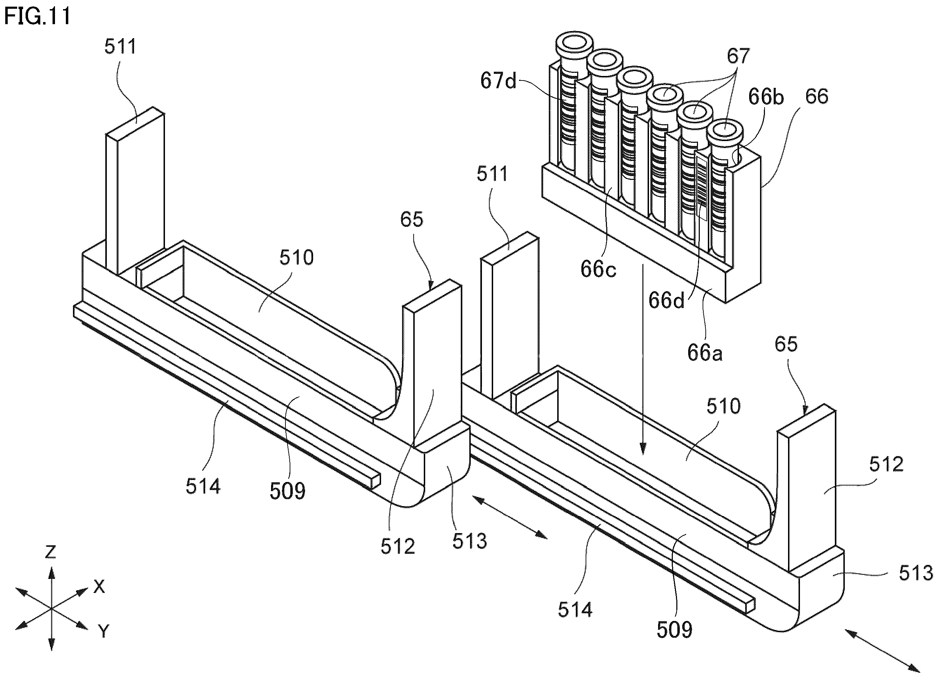

Hereinafter, configurations of the sample rack storage 50, the reagent rack storage 52, the sample rack tray 65, the sample rack 66, the sample container 67, the reagent rack tray 85, the reagent rack 86, and the reagent container 87 are described in detail with reference to FIGS. 11 to 16.

FIG. 11 is a diagram illustrating the sample rack tray 65 installed in the sample rack storage 50 and the sample rack 66 holding the sample containers 67 and placed on the sample rack tray 65. As shown in FIG. 11, the sample rack tray 65 includes the elongated base 509 having a rectangular shape in plan view. The sample rack tray 65 includes the rear light-shielding wall 511 extending upward from a first end portion of the base 509 in the longitudinal direction, the front light-shielding wall 512 extending upward from a second end portion of the base 509 in the longitudinal direction, and the rack placement unit 510 which is a recessed portion formed in the base 509. The sample rack tray 65 is installed in the sample rack storage 50 in a state where the second end portion of the base 509 in the length direction faces forward in the front-rear direction Y.

The rack placement unit 510 is formed between the rear light-shielding wall 511 and the front light-shielding wall 512 with a size capable of accommodating one of the sample rack 66. The rack placement unit 510 stores the sample rack 66 in a state where the length direction of the sample rack 66 is along the length direction of the sample rack tray 65. Each of the rear light-shielding wall 511 and the front light-shielding wall 512 has a substantially square plate shape whose plate surface faces the front-rear direction Y, and is formed perpendicular to the base 509.

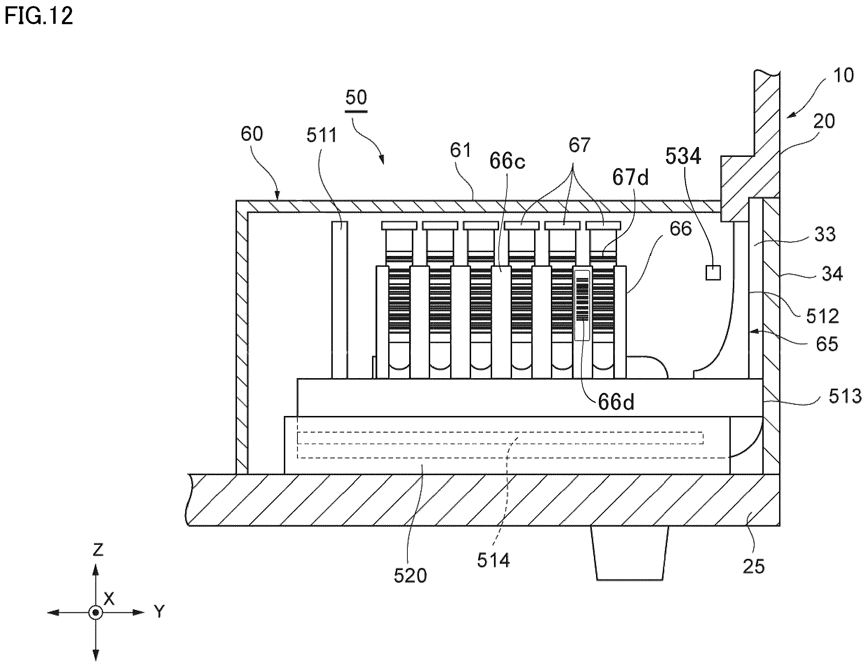

The sample rack tray 65 further includes the pressing part 513 formed at a front end of the base 509, and the rail 514 protruding from a side surface of the base 509. The pressing part 513 is a portion that presses the lid 34 from the inside of the housing 10 when the sample rack tray 65 is pulled out from the sample rack storage 50, and protrudes further forward than the front light-shielding wall 512. The rail 514 is a portion to be inserted into a slider 520 (see FIG. 12 described later) formed on the bottom portion of the sample rack storage 50, and is formed straight along the length direction of the base 509.

The sample rack 66 includes holders 66b capable of holding a plurality of the sample container 67 in an upright state. The number of holders 66b is not particularly limited. In the present embodiment, the six holders 66b are arranged in a line in the longitudinal direction of the sample rack 66. The sample rack 66 includes a bottom portion 66a having a rectangular shape in plan view and the partition wall 66c extending upward from the bottom portion 66a. The partition wall 66c is formed perpendicularly to the bottom portion 66a, and partitions the holders 66b which are storage spaces of the sample container 67. Each of the holders 66b has a size capable of housing one of the sample container 67.

The sample rack 66 is provided with the sample rack identification information 66d. The sample rack identification information 66d is a display including identification information readable by the information reading apparatus 700, and is preferably a one-dimensional code or a two-dimensional code. The identification information read from the sample rack identification information 66d is a sample rack identification (ID) and is unique information that can distinguish the sample rack 66 from other racks. In the example illustrated in FIG. 11, a barcode, which is a one-dimensional code, is provided on the partition wall 66c of the sample rack 66. The Sample rack identification information 66d is provided, for example, by attaching a label on which a barcode is printed to the partition wall 66c.

The sample container 67 is a bottomed cylindrical container containing sample such as blood collected from the subject. The sample container 67 is provided with the sample identification information 67d. The sample identification information 67d is identification information readable by the information reading apparatus 700, and is a one-dimensional code or a two-dimensional code. The identification information read from the sample identification information 67d is a sample ID, which is unique information capable of distinguishing the sample container 67 from other containers. In the example illustrated in FIG. 11, a barcode that is a one-dimensional code is provided on a side surface of the sample container 67. The sample identification information 67d is provided, for example, by attaching a label on which a barcode is printed to a side surface of the sample container 67.

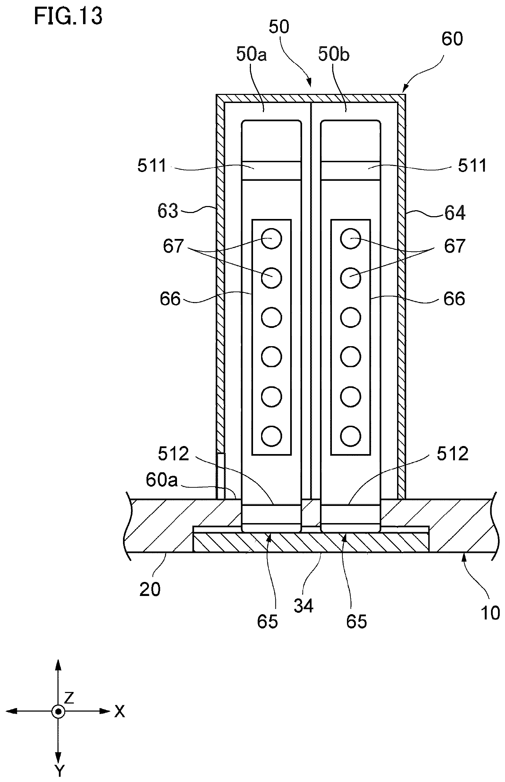

FIGS. 12 and 13 are diagrams illustrating a state where the sample rack tray 65 is stored in sample rack storage 50. As shown in FIGS. 12 and 13, the sample rack storage 50 is configured to store the sample rack tray 65 on which the sample rack 66 is placed. The sample rack storage 50 includes two lanes 50a and 50b adjacent to each other in the left-right direction X of the sample rack storage 50, and a plurality of the sample rack 66 can be installed therein. Each of the lanes 50a and 50b can accommodate the sample rack tray 65 and is provided with an independent electric drive mechanism.

The sample rack storage 50 includes the housing member 60 provided to cover the entire the sample rack tray 65. The housing member 60 is a light shielding member that surrounds the sample rack tray 65, and includes the opening 60a that allows the sample rack tray 65 to be inserted into and removed from the sample rack storage 50. the dispensing hole 62 (see FIG. 2) is formed in the upper surface 61 of the housing member 60 to allow sample container 67 to dispense sample.

The sample rack storage 50 includes the slider 520 provided on the bottom surface 25 of the housing 10. The slider 520 includes a groove into which the rail 514 of the sample rack tray 65 is inserted, and extends long in the front-rear direction Y to support the sample rack tray 65 in a state of being movable in the front-rear direction Y. The opening 33 through which the sample rack tray 65 can be inserted into and removed from the sample rack storage 50 is formed in the front surface 20 of the housing 10, and the housing member 60 is placed such that the opening 60a overlaps the opening 33. The sample rack tray 65 is accommodated in the sample rack storage 50 through the openings 33 and 60a.

The housing member 60 includes the left side surface 63 and the right side surface 64 that respectively cover left and right sides of the sample rack tray 65 accommodated in the sample rack storage 50. The right side surface 64 is in contact with the inner surface of the front surface 20 of the housing 10, and is placed without a gap in between the inner surface of the front surface 20. The left side surface 63 is placed with a predetermined gap from the inner surface of the front surface 20. The gap between the left side surface 63 and the front surface 20 allow light emitted from the information reading apparatus 700 to pass therethrough. The front light-shielding wall 512 of the sample rack tray 65 is placed so as to close the opening 33, and prevents external light from entering through the opening 33 when the lid 34 is opened.

The sample rack 66 is placed on the sample rack tray 65 with sample rack identification information 66d facing the left side of the sample measuring apparatus 1. The sample rack 66 holds one of the sample containers 67 for each of the holders 66b such that the sample identification information 67d faces the left side of the sample measuring apparatus 1. That is, sample rack identification information 66d and the sample identification information 67d are stored in sample rack storage 50 in a state of facing the same direction. The partition wall 66c of the sample rack 66 is formed so as not to cover the side surface of the sample container 67 facing the left side of the sample measuring apparatus 1. Therefore, the sample identification information 67d of the sample container 67 accommodated in holders 66b can be read.

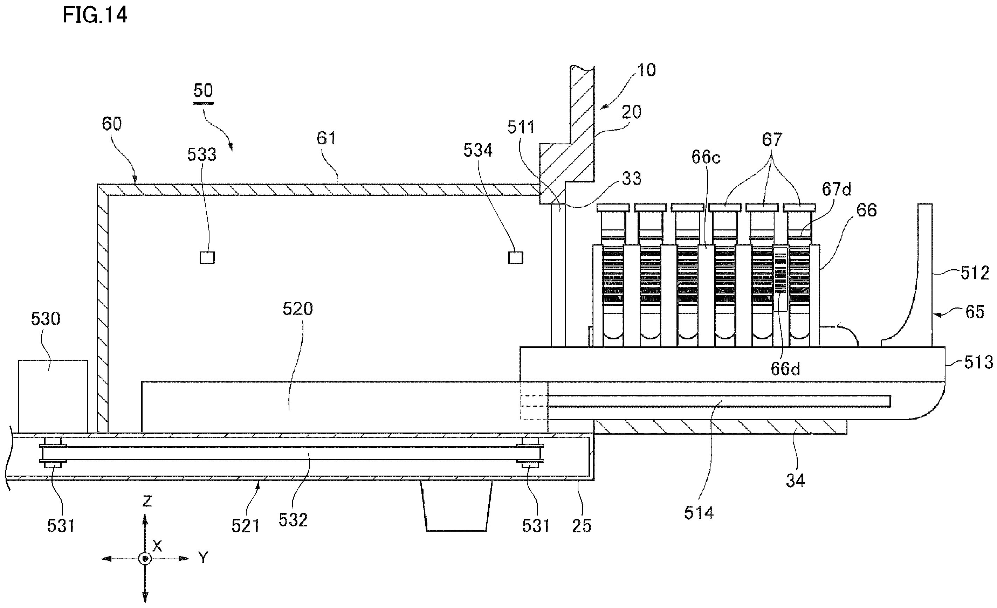

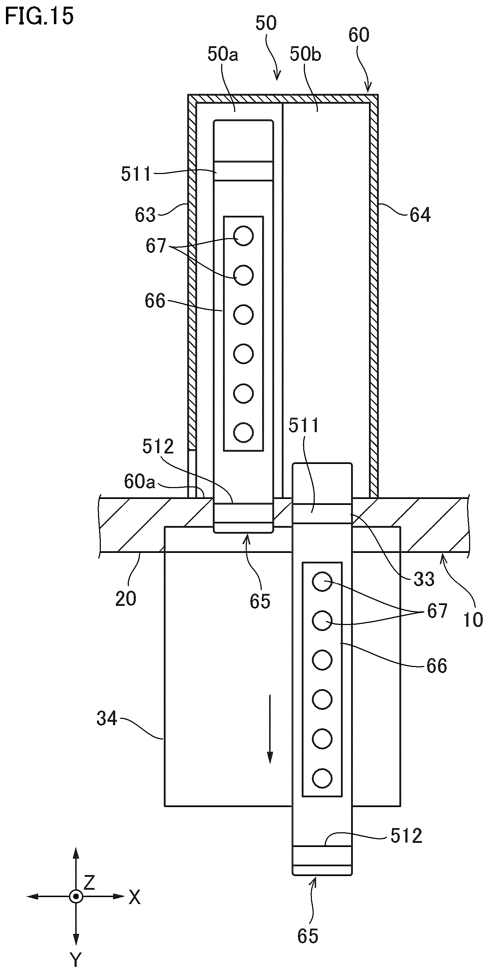

FIGS. 14 and 15 are diagrams illustrating a state in which the sample rack tray 65 is pulled out from sample rack storage 50. As shown in FIGS. 14 and 15, the sample rack storage 50 is configured to move the sample rack tray 65 along the front-rear direction Y and to allow the sample rack tray 65 to be taken in and out through the opening 33 of the housing 10. The sample rack storage 50 includes the electric drive mechanism 521 that moves the sample rack tray 65. The drive mechanism 521 includes the motor 530, the two pulleys 531, and the belt 532 wound around the two pulleys 531.

The drive mechanism 521 has a structure in which the two pulleys 531 are placed apart from each other in the front-rear direction Y and the belt 532 is arranged along the front-rear direction Y below the slider 520. The belt 532 is connected to the sample rack tray 65 via, for example, a predetermined connection fitting. The motor 530 is arranged behind sample rack storage 50 and drives the rear pulley 531. The belt 532 is interlocked by the driving of the pulley 531 on the rear side, and the sample rack tray 65 connected to the belt 532 moves in the front-rear direction Y along the slider 520.

When the sample rack tray 65 is pulled out from the sample rack storage 50, the pressing part 513 of the sample rack tray 65 presses the lid 34 from the inside of the housing 10 to open the lid 34 as described above. The drive mechanism 521 moves the sample rack tray 65 to a position where the rack placement unit 510 of the sample rack tray 65 is completely pulled out to the outside of the housing 10 and the rear light-shielding wall 511 closes the opening 33. Since the rear light-shielding wall 511 closes the opening 33, external light is prevented from entering the housing 10 through the opening 33.

The drive mechanism 521 is operated by operating an instruction button of the monitor 40 which is a touch panel. When the sample rack tray 65 is accommodated in sample rack storage 50, the motor 530 is operated based on the operation of the instruction button, the lid 34 is opened by being pushed by the pressing part 513 of the sample rack tray 65, and the sample rack tray 65 is pulled out from sample rack storage 50. When the instruction button is operated in a state where the sample rack tray 65 is pulled out, the motor 530 is operated to move the sample rack tray 65 into sample rack storage 50.

The sample rack storage 50 includes the sensor 533 that detects the presence of the sample rack tray 65. The sensor 533 is provided behind the sample rack storage 50 inside the housing member 60. In the case where the sample rack tray 65 is stored in the sample rack storage 50 based on the operation of the instruction button, the motor 530 stops when the sample rack tray 65 is detected by the sensor 533 as being subjected to detect. The sensor 533 is, for example, a reflective photosensor, and is provided for each of the lanes 50a and 50b.

The sample rack storage 50 includes a sensor 534 that can detect the presence of the sample rack 66 in the sample rack tray 65. A photosensor similar to the sensor 533 may be used as the sensor 534. The sensor 534 may be provided for each of the lanes 50a and 50b. The detected information of the sample rack 66 by the sensor 534 may be used as a trigger to start imaging of the information reading apparatus 700.

FIG. 16 is a diagram illustrating the reagent rack tray 85 stored in the reagent rack storage 52. As shown in FIG. 16, the groove 560 into which a lower portion of the reagent rack tray 85 is fitted is formed in a bottom portion of the reagent rack storage 52. The groove 560 extends in the front-rear direction Y and serves as a guide when the reagent rack tray 85 is moved in the front-rear direction Y. The reagent rack tray 85 includes the rack placement unit 550, the wall 551 provided in front of the rack placement unit 550, and the handle 552 extending forward from an upper end portion of the wall 551. In the present embodiment, the reagent rack storage 52 does not have an electric drive mechanism, and the reagent rack tray 85 is manually moved in the front-rear direction Y by the user holding the handle 552. The wall 551 functions as a lid that closes the opening of the cooling unit 83 when the sample rack tray 65 is housed in the reagent rack storage 52.

The reagent rack 86 includes the holders 86b capable of holding a plurality of reagent container 87 in an upright state. The number of the holders 86b is not particularly limited. In the present embodiment, six of the holders 86b are arranged in a line in the longitudinal direction of the reagent rack 86. The reagent rack 86 includes a bottom portion 86a having a rectangular shape in plan view and a wall 86c extending upward from the bottom portion 86a. The wall 86c is formed to be slightly inclined from the vertical direction with respect to the bottom portion 86a, and partitions the holders 86b which are storage spaces of the reagent container 87.

The reagent rack 86 includes the position information 86d. The position information 86d is position information of each of the holders 86b, and is provided on the wall 86c adjacent to one of the holders 86b. The position information 86d may be a two-dimensional code, but in the example illustrated in FIG. 16, the position information 86d is configured by a barcode which is a one-dimensional code. The position information 86d may be provided, for example, by attaching a label on which a barcode is printed to the wall 86c. The reagent rack 86 does not have a rack ID.

The reagent rack 86 further includes absence information 86e. An example of the absence information 86e is a bar code, and may be provided by attaching a label on which the bar code is printed to reagent rack 86. The absence information 86e is provided on a wall portion forming an inner surface of the holders 86b at a position readable when the reagent container 87 is not accommodated in the holders 86b. The position information 86d and the absence information 86e are provided to face the same direction. The reagent rack 86 is placed on the reagent rack tray 85 such that the position information 86d and the absence information 86e face the apparatus left side.

The reagent container 87 is a bottomed cylindrical container containing a reagent for preparing measurement of specimen to be measured. The reagent container 87 is provided with the reagent identification information 87d. The reagent identification information 87d is identification information readable by the information reading apparatus 700, and is a one-dimensional code or a two-dimensional code. The identification information read from the reagent identification information 87d is a reagent ID, which is unique information that can distinguish the reagent container 87 from other containers.

In the example illustrated in FIG. 16, three of the reagent containers 87 are held by three holders 86b of the reagent rack 86 one by one. Barcodes, which are one-dimensional codes, are provided on the side surfaces of the two reagent containers 87, and a two-dimensional code is provided on the side surface of one of the reagent container 87. An example of the two-dimensional code is a QR code (registered trademark). The reagent identification information 87d can be provided, for example, by attaching a label on which a one-dimensional code or a two-dimensional code is printed to a side surface of the reagent container 87.

### < sample Measuring Method >

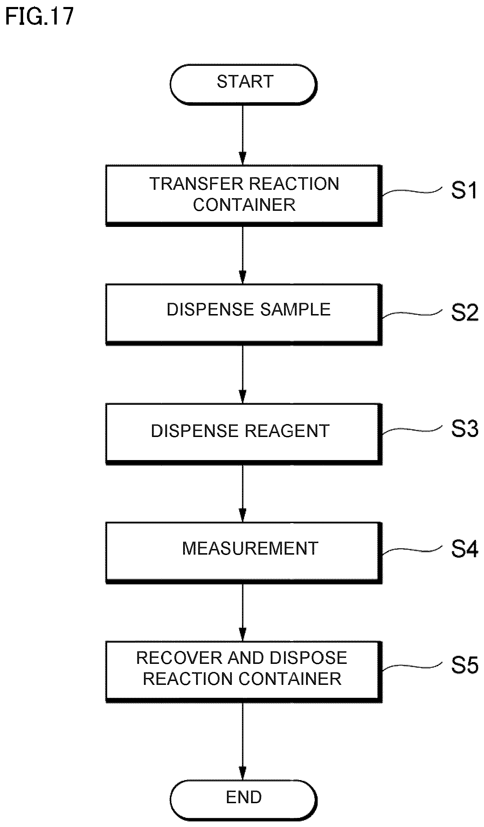

Next, an example of sample measurement using the sample measuring apparatus 1 configured as described above will be described. FIG. 17 is a flowchart showing a process of sample measurement.

In sample measurement of the sample measuring apparatus 1, the reaction container transfer step S1, the sample dispensing step S2, the reagent dispensing step S3, the measurement step S4, and the reaction container collection and disposal step S5 may be mainly performed in this order. These steps may be executed by the controller 57.

Before the start of sample measurement, a plurality of empty reaction container 70 are stored in the reaction container storage 51 as shown in FIG. 2. The sample rack 66 including the plurality of the sample container 67 accommodating sample is held by the sample rack tray 65 and accommodated in the sample rack storage 50. The reagent rack 86 including the reagent container 87 accommodating reagent is held by the reagent rack tray 85 and accommodated in the reagent rack storage 52.

In sample measurement, the transfer step S1 of the reaction container 70 is performed. In the reaction container transfer process S1, first, the container holder 201 of the dispensing device 190 moves from an initial position onto the container rack 71 of reaction container storage 51, and then is descended to hold an empty reaction container 70 of the container rack 71.

Next, the container holder 201 moves onto the heating unit 90 and then is descended, and the reaction container 70 is held in the holding hole 120 of the heating unit 90. Then, the container holder 201 is lifted.

Subsequently, the sample dispensing step S2 is performed. First, the pipette 200 of the dispensing device 190 is moved above the sample rack storage 50 and lowered. The pipette 200 is inserted into the sample container 67 of the sample rack 66 held in the sample rack tray 65 through the dispensing hole 62 in the upper surface 61 of the housing member 60 to aspirate sample.

Thereafter, the pipette 200 is lifted above the sample rack storage 50 and moves above the heating unit 90. The pipette 200 is descended toward the reaction container 70 of the heating unit 90 and injects sample into the reaction container 70.

Next, the pipette 200 is lifted above the heating unit 90 and moves above the cleaning unit 54. The pipette 200 is descended toward the cleaning tank 160 of the cleaning unit 54, is inserted into the cleaning tank 160, and is cleaned. Finally, the pipette 200 is lifted above the cleaning unit 54.

Next, the reagent dispensing step S3 is performed. First, the pipette 200 moves onto the reagent rack storage 52 and is descended. The pipette 200 is inserted into the reagent container 87 of the reagent rack 86 held by the reagent rack tray 85 through the dispensing hole 82 in the upper surface 81 of housing member 80, and aspirate reagent.

The pipette 200 then is lifted above the reagent rack storage 52. Next, reagent of the pipette 200 is heated by the heating member 360. The pipette 200 moves onto the heating unit 90 while reagent of the pipette 200 is heated.

Next, the container holder 201 of the dispensing device 190 is descended toward the reaction container 70 of the heating unit 90 and holds the reaction container 70 of the heating unit 90.

Next, the container holder 201 is lifted above the heating unit 90, and the pipette 200 is descended and is inserted into the reaction container 70. The pipette 200 then injects reagent into the reaction container 70 of the container holder 201. Next, the reaction container 70 of the container holder 201 is vibrated by the vibrating member 350, sample containing reagent is agitated, and the measured reagent is prepared.

Next, the container holder 201 shown in FIG. 2 moves onto the detector 91 and then is descended. The container holder 201 is descended toward the holding hole 130 of the detector 91 to hold the reaction container 70 in the holding hole 130. Finally, the container holder 201 is lifted on the detector 91.

Next, the measurement step S4 is performed. Sample measurement performed in the measurement step S4 is affected by external light. In the detector 91, blood coagulation measurement for analyzing the activity of coagulation factor of sample accommodated in the reaction container 70 is performed. As shown in FIG. 7, the measurement is performed by irradiating a measurement specimen in the reaction container 70 with light from the light source 140, performing detect on the light transmitted through the measurement specimen by the detector 141, and measuring optical information of the measurement specimen.

The optical information is time-series data of the light subjected to detect by the detector 141. That is, the optical information is time-series data that is continuously subjected to detect for a predetermined time, and the time for which the time-series data is subjected to detect is about 30 seconds to 5 minutes. The time series data may be a plurality of pieces of time series data obtained by performing detect on light of wavelengths that has passed through the measurement specimen. For example, the time series data may be for calculating coagulation time of sample, the concentration of a component contained in sample, or the activity, and coagulation time of sample may be calculated from the time series data using the percent detect method. In addition, the concentration or activity of a component contained in sample may be calculated from the time-series data using a synthetic substrate measurement method, and the concentration or activity of a component contained in sample may be calculated from the time-series data using an immunoturbidimetric measurement method.

Finally, the reaction container collection and disposal step S5 is performed. First, the container holder 201 of the dispensing device 190 shown in FIG. 2 moves above the detector 91 and then descends. Next, the container holder 201 holds the reaction container 70 of the detector 91.

Next, the container holder 201 is lifted above the detector 91 and moves onto the disposal unit 55. The container holder 201 is descended toward the disposal outlet 170 of the disposal unit 55 and disposes of the reaction container 70 to the disposal outlet 170. Finally, the container holder 201 is lifted above the disposal unit 55 and then returned to its initial position.

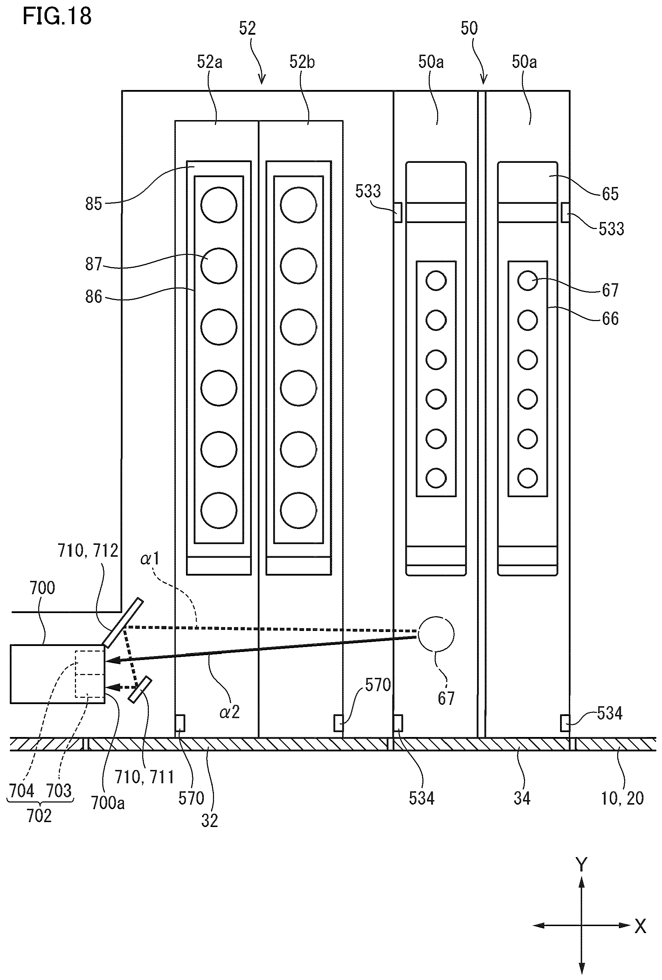

Hereinafter, the information reading apparatus 700, the first flection unit 710, and configurations related thereto will be described in detail with reference to FIGS. 18 to 26.

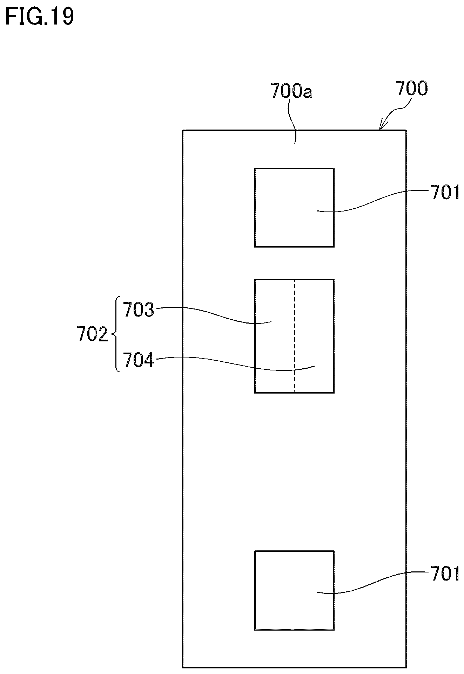

FIG. 18 is a diagram illustrating the information reading apparatus 700 and the first flection unit 710, and FIG. 19 is a diagram illustrating a front surface 700a of the information reading apparatus 700. FIG. 18 shows a state in which the sample rack tray 65 and the reagent rack tray 85 are accommodated in the sample rack storage 50 and the reagent rack storage 52, respectively. In FIG. 18, sample container 67 existing in front of the sample rack storage 50 is indicated by a virtual line.

As shown in FIGS. 18 and 19, the light source 701 of the information reading apparatus 700 emits light, and the first flection unit 710 guides a part of reflected light from sample container 67 to the light receiver 702 of the information reading apparatus 700. The remaining part of reflected light directly enters the light receiver 702 without passing through the first flection unit 710. Similarly, a part of the emission light emitted from the light source 701 is irradiated through the first flection unit 710, and the remaining part of the emission light is directly irradiated without passing through the first flection unit 710.

In the present embodiment, the identification information of the sample rack 66 and sample container 67, the position information 86d of the reagent rack 86, and the identification information of the reagent container 87 are read in front of the sample rack storage 50 and the reagent rack storage 52. In other words, the position between the front surface 20 of the housing 10 and the position where the rack tray is completely housed in each rack installation part, that is, the introduction path to the housing position of the sample rack 66 and the reagent rack 86 is the reading position of the identification information.

In the sample measurement apparatus 1, the information reading apparatus 700, the first flection unit 710, the reagent rack storage 52, and the sample rack storage 50 are arranged in order from the left side of the apparatus. The sample rack storage 50 is provided at a position geometrically farther from the information reading apparatus 700 than the reagent rack storage 52.

As described above, the information reading apparatus 700 includes the light source 701 and the light receiver 702, and is a device that irradiates an object such as sample container 67 or the reagent container 87 with light, receives reflected light from the object, and reads identification information thereof. The light source 701 and the light receiver 702 are provided on a front surface 700a of the information reading apparatus 700. In the example shown in FIG. 19, the light sources 701 are arranged so as to sandwich the light receiver 702 from above and below. The information reading apparatus 700 is placed close to the front surface 20 of the housing 10 in a state where the front surface 700a faces the right direction of the sample measuring apparatus 1.

As the information reading apparatus 700, a one-dimensional code reader generally called a barcode reader, or a two-dimensional code reader called a QR code reader can be used. In particular, since a two-dimensional code may be used for the reagent identification information 87d of the reagent container 87, a two-dimensional code reader is preferably used for the information reading apparatus 700. The light source 701 of the information reading apparatus 700 includes, for example, a light emitting diode (LED). The light receiver 702 includes, for example, a light receiving element such as a CCD image sensor or a CMOS image sensor, and a single focus lens having a fixed focal range that forms an image of the received reflected light on the image sensor. The light receiving element is also referred to as an imaging element. When light is incident on pixels arranged in a grid pattern, the light receiving element generates electric charges corresponding to the intensity of the light, and detect the light intensity of each pixel by extracting the magnitude of the electric charges as an electric signal. For example, the light receiving element converts detected light intensity into grayscale data of 256 gradations, and generates an image based on the data. It can be said that the information reading apparatus 700 is constituted by a digital camera including a decoding function described later. The processor of the digital camera has a decoding function.

The information reading apparatus 700 has a predetermined focus (hereinafter, referred to as "focus" in some cases) and is used in a state where the focus is fixed. Since the information reading apparatus 700 does not have an autofocus function and does not adjust the focus range when the imaging sample container 67, the reagent container 87, and the like, it is possible to quickly read the identification information. In addition, an inexpensive reader having no autofocus function can be used.

In the present embodiment, the information reading apparatus 700 is focused on an area in front of the sample rack storage 50 that is geometrically far from the information reading apparatus 700. That is, the focus of the information reading apparatus 700 is fixed to the sample rack tray 65 passing through the area in front of the sample rack storage 50, and the area in front of the reagent rack storage 52 is not focused on a linear distance. The sample measuring apparatus 1 is not provided with a mechanism or a control circuit for automatically adjusting the focus by moving the information reading apparatus 700 in the left-right direction X. Although details are described later, according to the sample measuring apparatus 1, it is possible to accurately read the identification information in both the area in front of the sample rack storage 50 and the area in front of the reagent rack storage 52 using one information reading apparatus 700 which does not have an autofocus function and has a fixed position. That is, the first reflected light from the reagent container 87 passing through the area in front of the reagent rack storage 52 is corrected by the first flection unit 710. Accordingly, the optical distance of the first reflected light acquired via the first flection unit 710 and the optical distance of the second reflected light acquired from the sample container 67 passing through the area in front of the sample rack storage 50 without passing through the flection unit 710 can be made substantially the same. The information reading apparatus 700 can be focused on the reagent container 87 and the sample container 67 having different geometric distances.

The information reading apparatus 700 captures images of the sample rack 66 and the sample container 67 passing through the area in front of the sample rack storage 50. sample rack identification information 66d and the sample identification information 67d are extracted from the obtained image, and the identification information (the rack ID and sample ID) is read. A series of processes of reading the identification information from the obtained image is generally called decoding. The information reading apparatus 700 performs imaging and decoding, and transmits the read rack ID and sample ID to the controller 57. A specific decoding method is not particularly limited. The controller 57 stores the rack ID of the sample rack 66 stored in sample rack storage 50 and sample ID of the sample container 67 in the memory, and performs sample execute measurement using the information.

When the instruction button of the monitor 40 is operated in a state where the sample rack tray 65 is pulled out from the sample rack storage 50, the information reading apparatus 700 may start imaging the area in front of the sample rack storage 50. When the instruction button is operated in a state where the sample rack tray 65 is pulled out, the sample rack tray 65 moves toward the inside of the sample rack storage 50. The sample rack 66 placed on the sample rack tray 65 passes through the area in front of the sample rack storage 50. Therefore, the sample rack 66 and the sample container 67 can be imaged by starting imaging based on the operation of the instruction button.

For example, when the instruction button is operated, the information reading apparatus 700 receives a control signal for starting imaging from the controller 57. In this case, the controller 57 is configured to transmit a control signal for starting imaging to the information reading apparatus 700 upon receiving an operation signal of the instruction button.

The information reading apparatus 700 may start imaging when the sensor 534 detect the sample rack 66. The information reading apparatus 700 receives a control signal for starting imaging from the controller 57, for example, when the sample rack 66 is detected by the sensor 534. In this case, the controller 57 is configured to transmit a control signal for starting imaging to the information reading apparatus 700 upon receiving detect signal of the sensor 534.

The controller 57 preferably controls the drive mechanism 521 such that the sample rack tray 65 moves to the rear of the apparatus while temporarily stopping at the position of each of the sample container 67 when each of the sample container 67 passes through the area in front of the sample rack storage 50. The time during which each of the sample container 67 stops is, for example, 0.1 seconds to 5 seconds. In this case, the accuracy of reading the sample identification information 67d is improved as compared with the case where the sample rack tray 65 is continuously moved. Since the sample rack identification information 66d is provided on the partition wall 66c adjacent to the holder 66b, the sample rack identification information 66d may be read at the same time when the sample identification information 67d of the adjacent sample container 67 is read.

The information reading apparatus 700 ends the imaging at a timing when the identification information of the sample rack 66 and all the sample container 67 placed on the sample rack tray 65 is read. For example, the information reading apparatus 700 ends the imaging when the sensor 533 provided at the rear of the sample rack storage 50 detects the sample rack tray 65. **In** this case, the controller 57 is configured to transmit a control signal for ending imaging to the information reading apparatus 700 upon receiving detect signal of the sensor 533.

The information reading apparatus 700 captures an image of an area in front of the reagent rack storage 52 and reads the position information 86d of the reagent rack 86 and the identification information of the reagent container 87 passing through the area. In the present embodiment, the reagent rack tray 85 on which the reagent rack 86 is placed is manually moved in the front-rear direction Y. For this reason, the information reading apparatus 700 starts imaging, for example, when the reagent sensor 570 installed in front of the reagent rack storage 52 detects that detect the reagent rack tray 85 is moved. The controller 57 is configured to transmit a control signal for starting imaging to the information reading apparatus 700 upon receiving detect signal of the sensor 570.

The first flection unit 710 is placed between the information reading apparatus 700 and the reagent rack storage 52, and bends reflected light from the sample container 67, the reagent container 87, and the like. Note that a part of reflected light directly enters the light receiver 702 without passing through the first flection unit 710. That is, the first flection unit 710 is configured not to shield a part of reflected light (hereinafter, may be referred to as "direct light") directly incident on the light receiver 702. The first flection unit 710 bends the optical axis of a part of the light emitted from the light source 701 of the information reading apparatus 700 and guides the light to the area in front of the sample rack storage 50 and the area in front of the reagent rack storage 52. In the present specification, for convenience of description, the optical axis of the first reflected light incident on the information reading apparatus 700 through the first flection unit 710 is referred to as an "optical axis α1", and the optical axis of the second reflected light incident on the information reading apparatus 700 without passing through the first flection unit 710 is referred to as an "optical axis α2".

In the present embodiment, the information reading apparatus 700 is focused on the area in front of the sample rack storage 50, but the distance of the optical path between the information reading apparatus 700 and the area in front of the reagent rack storage 52 close to the information reading apparatus 700 can be increased by the function of the first flection unit 710. As a result, it is possible to acquire a focused and clear image of the reagent rack 86 and the reagent container 87 that pass through the area in front of the reagent rack storage 52.

As will be described in detail later, when sample ID is read from the sample identification information 67d of the sample container 67, an image generated from direct light is used for the light receiver 702. The light receiver 702 also includes reflected light incident from the sample container 67 via the first flection unit 710, but an image generated from reflected light is not used for reading sample ID. On the other hand, when the reagent ID is read from the reagent identification information 87d of the reagent container 87, an image generated from reflected light incident on the light receiver 702 through the first flection unit 710 is used. For reading reagent ID, an image generated by the light receiver 702 from direct light is not used.

The light receiver 702 includes the first light receiving region 703 and the second light receiving region 704. The first light receiving region 703 is a region on which reflected light is incident via the first flection unit 710, and the second light receiving region 704 is a region on which direct light is incident. As described above, the image generated by the first light receiving region 703 is used for reading reagent ID, and the image generated by the second light receiving region 704 is used for reading sample ID. The first light receiving region 703 and the second light receiving region 704 can be set on the left and right sides of the light receiver 702 when the front surface 700a is viewed from the front by a mirror arrangement of the first flection unit 710 described later.

The first flection unit 710 is preferably formed of at least two mirrors, and includes the first mirror 711 placed to face the front surface 700a of the information reading apparatus 700 and the second mirror 712 placed not to face the front surface 700a. In the present embodiment, the second mirror 712 is placed behind the information reading apparatus 700. A part of reflected light from the sample container 67, the reagent container 87, and the like is reflected by the second mirror 712 and the first mirror 711 in this order, and enters the light receiver 702. The information reading apparatus 700, the first mirror 711, the second mirror 712, and the sample container 67 are arranged on the same horizontal plane.

The first mirror 711 is a reflection member that guides reflected light from the sample container 67, the reagent container 87, and the like reflected by the second mirror 712 to the light receiver 702. Therefore, the first mirror 711 is placed in a state of facing the second mirror 712 and the front surface 700a of the information reading apparatus 700. Since both the second mirror 712 and the front surface 700a face the apparatus right side and are placed adjacent to each other in the front-rear direction Y, the second mirror 712 is placed in a state of facing the apparatus left rear side. The reflection surface of the first mirror 711 faces, for example, the left rear side of the apparatus at an angle of 45°±15° with respect to the front surface 700a.

The first mirror 711 is interposed between the information reading apparatus 700 and the reagent rack storage 52, and is placed so as to shield a part of the front surface 700a when the front surface 700a of the information reading apparatus 700 is viewed from the device right side. In the present embodiment, the first mirror 711 is placed close to the front surface 20 of the housing 10, and is placed to face a range of about half of the front surface 700a on the front surface 20 side. In other words, when the front surface 700a is viewed from the apparatus right side, a range of about half of the front surface 700a on the apparatus rear side is not covered with the first mirror 711.

With the above arrangement of the first mirror 711, a part of reflected light from the sample container 67, the reagent container 87, and the like directly enters the light receiver 702. Specifically, light is directly incident on a region not facing the first mirror 711, and the region of the light receiver 702 becomes the second light receiving region 704. A region of the light receiver 702 which faces the first mirror 711 and in which direct light is blocked is a first light receiving region 703. The range of the front surface 700a facing the first mirror 711 can be adjusted by the size, angle, and the like of the first mirror 711 and is not particularly limited, but is, for example, 30% to 70% of the area of the front surface 700a.

The second mirror 712 is a reflection member that reflects reflected light from the sample container 67, the reagent container 87, and the like toward the first mirror 711. For this reason, the second mirror 712 is placed in a state facing the apparatus right side and the direction of the first mirror 711. The second mirror 712 is larger than the first mirror 711. Since the second mirror 712 is not placed to face the front surface 700a of the information reading apparatus 700, the second mirror 712 is preferably larger than the first mirror 711 from the viewpoint of collecting a large amount of reflected light. The angle of the reflecting surface of the second mirror 712 with respect to the reflecting surface of the first mirror 711 is not particularly limited, and the reflecting surfaces may be substantially parallel to each other.

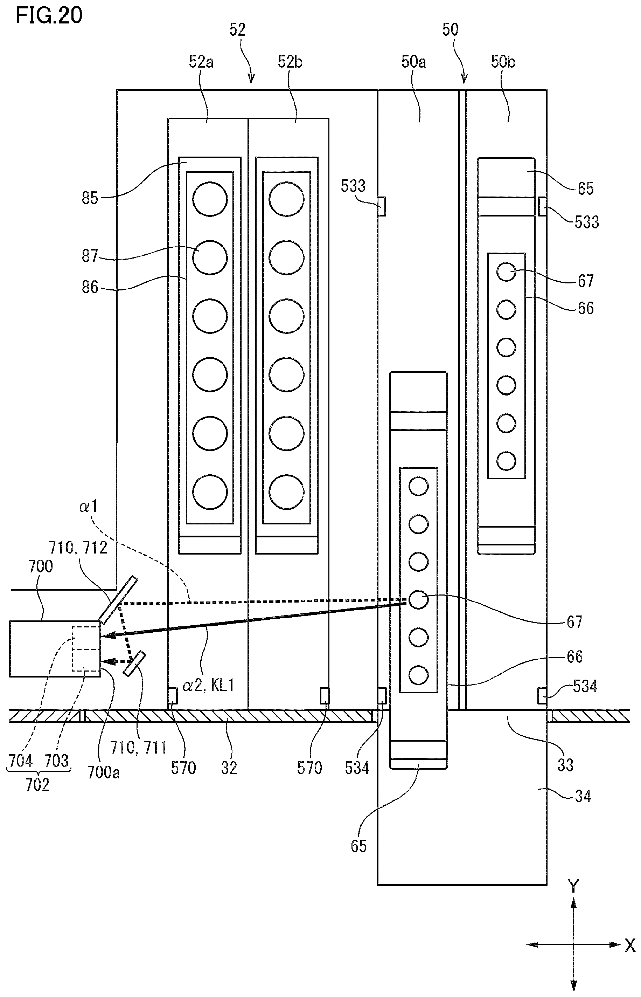

Hereinafter, the configurations of the information reading apparatus 700 and the first flection unit 710 are further described in detail by exemplifying a case of reading the sample identification information 67d of the sample container 67 with reference to FIGS. 20 to 22.

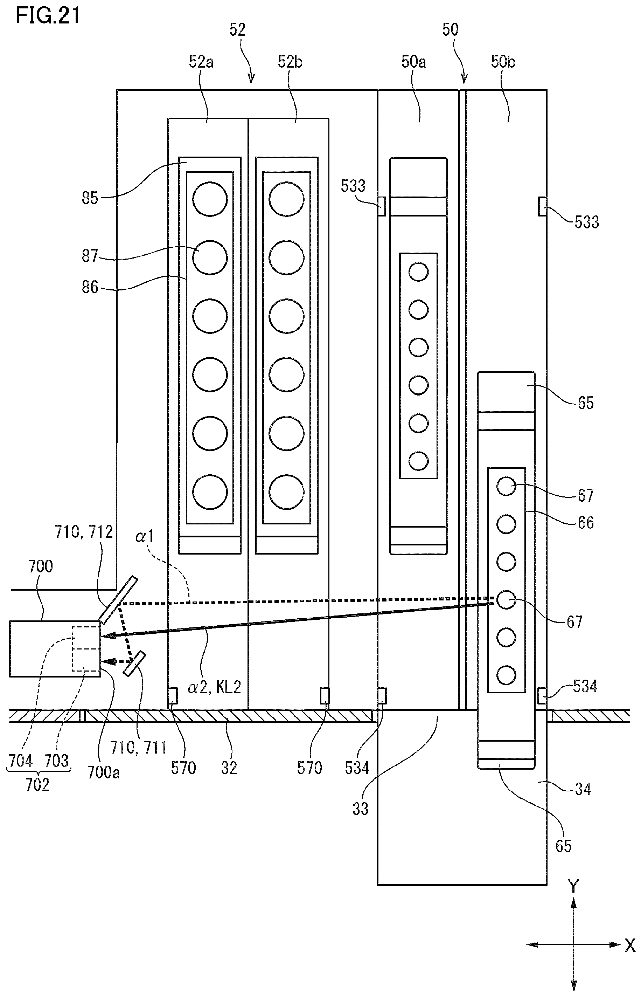

FIGS. 20 and 21 are diagrams illustrating a state in which the sample identification information 67d of the sample container 67 held in the sample rack 66 is read. As shown in FIGS. 20 and 21, the sample rack storage 50 has two lanes 50a and 50b arranged in the left-right direction X of the apparatus, and can store one of the sample racks 66 in each lane, but the reading of the identification information of the sample rack 66 and the sample container 67 is performed for each lane. In both lanes 50a and 50b, the sample rack 66 and the sample container 67 pass in front of the sample rack storage 50 and move to the rear of the sample rack storage 50 in a state of being placed on the sample rack tray 65, and the identification information is read when passing in front of the sample rack storage 50.

The information reading apparatus 700 captures an image of the sample container 67 when the sample rack tray 65 passes through the area in front of the sample rack storage 50. The light receiver 702 of the information reading apparatus 700 generates an image from reflected light of the sample container 67. The information reading apparatus 700 analyzes the image, extracts the sample identification information 67d which is a barcode, and reads sample ID.

Although reflected light through the first flection unit 710 is also incident on the light receiver 702, reflected light (direct light) directly incident on the light receiver 702 is used for reading the sample identification information 67d. In the first flection unit 710, the optical axis α1 of the bent reflected light (hereinafter, may be referred to as "refracted light") is incident only on the first light receiving region 703 of the light receiver 702 by the mirror arrangement. On the other hand, the optical axis α2 of reflected light directly incident from the sample container 67 without passing through the first flection unit 710 is incident only on the second light receiving region 704 of the light receiver 702. Therefore, it is possible to separate an image generated from the direct light and an image generated from the refracted light. Since the image generated from the direct light is in focus and clear, sample ID can be accurately read by using the image generated in the second light receiving region 704.

The two lanes 50a and 50b of the sample rack storage 50 are arranged adjacent to each other in the left-right direction X, and are both arranged within a range in which an image generated from direct light is in focus, that is, within a depth of field. In other words, the information reading apparatus 700 has such a depth of field that the image of the sample container 67 passing through the lane 50a and the image of the sample container 67 passing through the lane 50b are in focus. An example of the depth of field of the information reading apparatus 700 is 70 mm to 150 mm. The distance KL1 of the path of the direct light from the sample container 67 passing through the left lane 50a illustrated in FIG. 20 and the distance KL2 of the path of the direct light from the sample container 67 passing through the right lane 50b illustrated in FIG. 21 are not particularly limited. As an example, KL1 and KL2 may be 100 mm to 150 mm. KL1 and KL2 are second optical distances through which the second reflected light, which is direct light, passes between the identification information reader 700 and the sample rack tray 65 of each lane, and these optical distances are fixed distances that do not vary.

When reading the sample identification information 67d of the sample container 67, the information reading apparatus 700 preferably performs execute decoding processing using only the image generated by the second light receiving region 704 of the light receiver 702 as described above. Specifically, prior to the decoding process, the image generated by the entire region of the light receiver 702 is trimmed to delete the image generated by the first light receiving region 703. Then, the decoding processing is performed only on the image generated by the second light receiving region 704, that is, the image obtained from the direct light by execute. In this case, the decoding process can be performed using only the focused and clear image of the sample identification information 67d. As a result, the reading accuracy of the identification information is improved, and the processing speed is also increased.

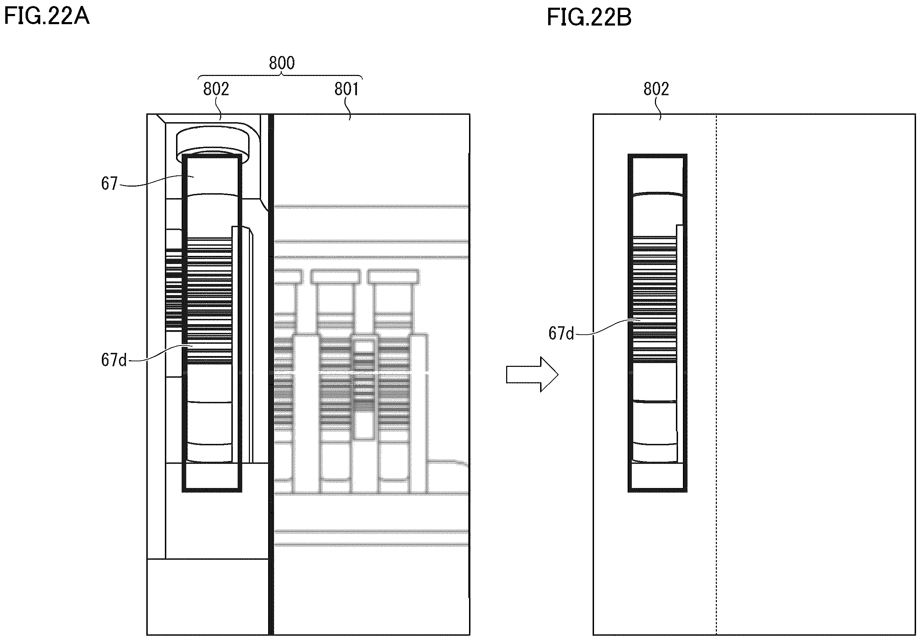

FIGS. 22A and 22B are diagrams illustrating an image of the area in front of the sample rack storage 50 captured by the information reading apparatus 700. FIG. 22A is a diagram illustrating an image 800 before the trimming process, and FIG. 22B is a diagram illustrating an image after the trimming process. The image 800 includes the image 801 of the refracted light generated by the first light receiving region 703 of the light receiver 702 and an image 802 of the direct light generated by the second light receiving region 704. An image 801 is an image reflected on the first mirror 711 of the first flection unit 710, and an end of the first mirror 711 is a boundary between the images 801 and 802. Therefore, the boundary between the out-of-focus image 801 of the refracted light and the infocus image 802 of the direct light is clear, and it is easy to leave only the image 802 by trimming.

The trimming process by the information reading apparatus 700 is executed based on, for example, a control signal of the controller 57. When the controller 57 reads the sample identification information 67d, the controller 57 outputs a control signal for deleting the image 801 generated by the first light receiving region 703 and a control signal for executing a decoding process using only the image 802 generated by the second light receiving region 704, together with a control signal for starting imaging. The information reading apparatus 700 may further trim the image 802 to delete the image around the sample identification information 67d and then execute the decoding process.

The controller 57 grasps the position of each of the sample container 67 held in line in the sample rack 66, that is, the position of holder 66b of the sample rack 66 in which each sample container 67 is accommodated. Each of the lanes 50a and 50b of the sample rack storage 50 is provided with an independent electric drive mechanism 521. Therefore, the controller 57 is capable of acquiring, for example, information for specifying holder 66b existing in the area in front of the sample rack storage 50 from the drive mechanism 521. The controller 57 stores sample ID of the sample container 67 read by the information reading apparatus 700 in association with the position information of holder 66b. When the sample container 67 is not accommodated in holder 66b, the sample identification information 67d is not read. The fact that the sample container 67 is not accommodated in holder 66b is stored.

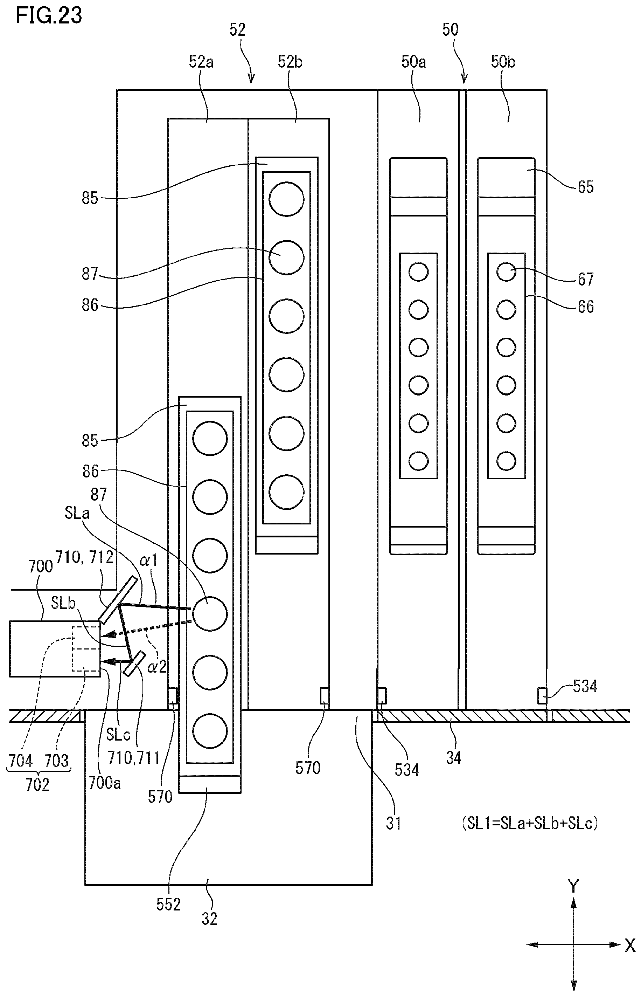

Hereinafter, the configurations of the information reading apparatus 700 and the first flection unit 710 will be further described in detail by exemplifying a case of reading the reagent identification information 87d of the reagent container 87 with reference to FIGS. 23 to 25 as appropriate.

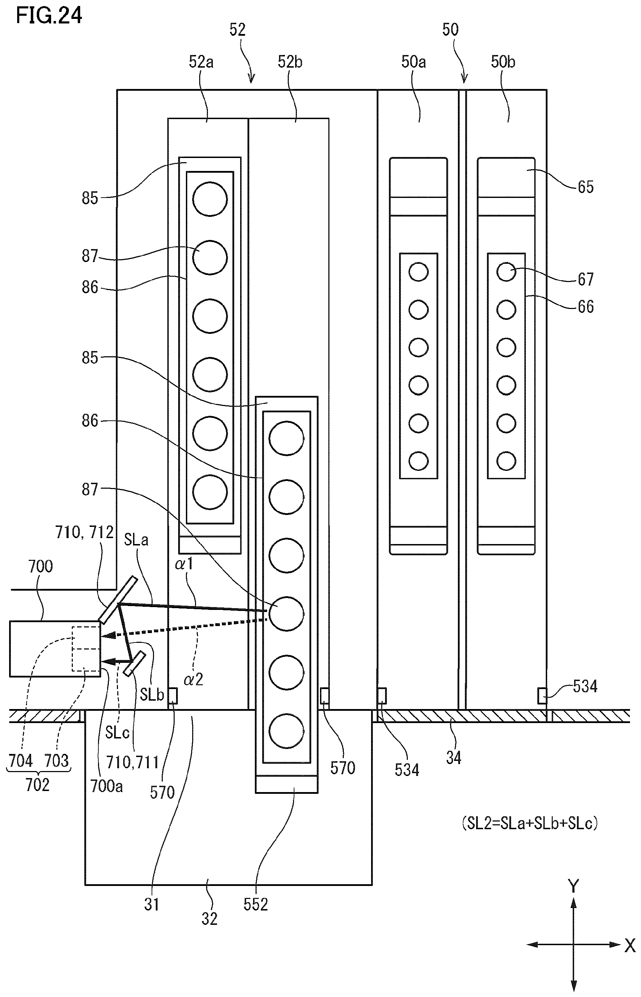

FIGS. 23 and 24 are diagrams illustrating a state in which the reagent identification information 87d of the reagent container 87 held by the reagent rack 86 is read. As shown in FIGS. 23 and 24, the reagent rack storage 52 includes two lanes 52a and 52b arranged in the left-right direction X of the apparatus. Therefore, one of the reagent rack 86 can be stored in each lane. The position information 86d of the reagent rack 86 and the identification information of the reagent container 87 are read for each lane. In each of the lanes 52a and 52b, the reagent rack 86 and the reagent container 87, which are placed on the reagent rack tray 85, pass through the front of the reagent rack storage 52 and move into the reagent rack storage 52, and the identification information is read when the reagent rack 86 and the reagent container 87 pass through the front of the reagent rack storage 52.

The information reading apparatus 700 captures an image of the reagent container 87 when the reagent rack tray 85 passes through the area in front of the reagent rack storage 52. The light receiver 702 of the information reading apparatus 700 generates an image from reflected light of the reagent container 87. The information reading apparatus 700 analyzes the image, extracts the reagent identification information 87d which is a barcode or a QR code (registered trademark), and reads reagent ID.

Although direct light from the reagent container 87 is also incident on the light receiver 702, refracted light incident through the first flection unit 710 is used to read the reagent identification information 87d. As described above, due to the mirror arrangement of the first flection unit 710, the optical axis α1 of the refracted light is incident only on the first light receiving region 703 of the light receiver 702. Therefore, the reagent ID can be read using the image of the refracted light generated in the first light receiving region 703.

The distance SL1 of the path of the refracted light incident on the first light receiving region 703 via the first flection unit 710 from the reagent container 87 passing through the left lane 52a illustrated in FIG. 23 is a length obtained by adding SLa, SLb, and SLc. SLa is the distance of the optical path from the reagent container 87 to the second mirror 712, SLb is the distance of the optical path from the second mirror 712 to the first mirror 711, and SLc is the distance of the optical path from the first mirror 711 to the light receiver 702. SL1 is a first optical distance through which the first reflected light that is the refracted light passes between the identification information reader 700 and the reagent rack tray 85 of each lane, and this optical distance is a fixed distance that does not change.

The first optical distance SL1 of the refracted light from the reagent container 87 is a length approximate to the second optical distances KL1 and KL2 (see FIGS. 20 and 21) of the direct light from the sample container 67, and is a length within the depth of field of the information reading apparatus 700. That is, the mirror arrangement of the first flection unit 710 is determined so that SL1 falls within the depth of field. In other words, the first optical distance SL1 and the second optical distances KL1 and KL2 are substantially the same. Therefore, the image of the reagent container 87 generated from the refracted light is in focus and clear, and the reagent ID can be accurately read by using the image generated in the first light receiving region 703.

The distance SL2 of a path of the refracted light incident on the first light receiving region 703 from the reagent container 87 passing through the lane 52b on the right side illustrated in FIG. 24 via the first flection unit 710 is a length obtained by adding SLa, SLb, and SLc, similarly to SL1. This is a fixed first optical distance that does not vary and through which the first reflected light that is refracted light passes between the identification information reader 700 and the reagent rack tray 85 of each lane. In this case, the distance SLa of the optical path from the reagent container 87 to the second mirror 712 is longer than SLa in the case of the lane 52a. SL2 is also set to a length within the depth of field of the information reading apparatus 700. The two lanes 52a and 52b of the reagent rack storage 52 are placed adjacent to each other in the left-right direction X, and are both positioned in a range in which an image generated from the refracted light (optical axis α1) is in focus.

When reading the reagent identification information 87d of the reagent container 87, the information reading apparatus 700 preferably performs execute decoding processing using only the image generated by the first light receiving region 703 of the light receiver 702 as described above. Specifically, prior to the decoding process, the image generated by the entire region of the light receiver 702 is trimmed to delete the image generated by the second light receiving region 704. Then, the decoding processing is performed only on the image generated by the first light receiving region 703, that is, the image obtained from the refracted light by execute. In this case, the decoding process can be performed using only the focused and clear image of the reagent identification information 87d. As a result, the reading accuracy of the identification information is improved, and the processing speed is also increased.

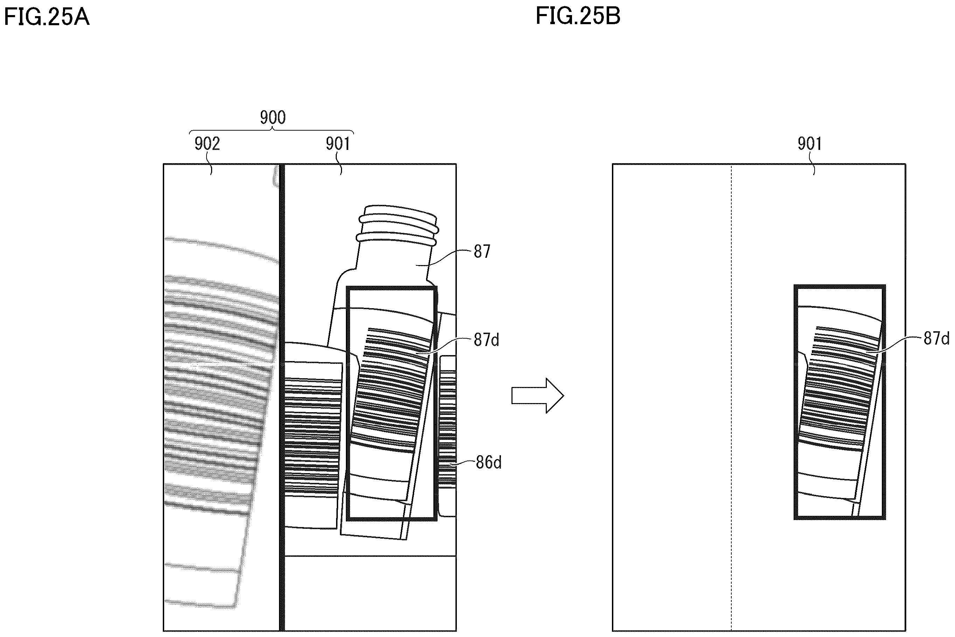

FIGS. 25A and 25B is a diagram illustrating an image of an area in front of the reagent rack storage 52 captured by the information reading apparatus 700. FIG. 25A is a diagram illustrating an image 900 before the trimming process, and FIG. 25B is a diagram illustrating an image after the trimming process. The image 900 includes an image 901 of the refracted light generated by the first light receiving region 703 of the light receiver 702 and an image 902 of the direct light generated by the second light receiving region 704. An image 901 is an image reflected on the first mirror 711 of the first flection unit 710, and an end of the first mirror 711 is a boundary between the images 901 and 902. Therefore, the boundary between the focused image 901 of the refracted light and the unfocused image 902 of the direct light is clear, and it is easy to leave only the image 901 by trimming.

The trimming process by the information reading apparatus 700 is executed based on, for example, a control signal of the controller 57. When reading the reagent identification information 87d, the controller 57 outputs a control signal for deleting the image 902 generated by the second light receiving region 704 and a control signal for executing a decoding process using only the image 901 generated by the first light receiving region 703 together with a control signal for starting imaging. The information reading apparatus 700 may further trim the image 901 to delete the image around the reagent identification information 87d and then execute the decoding process.

The controller 57 grasps the position of each of the reagent container 87 held in line in reagent rack 86, that is, the position of the holders 86b of the reagent rack 86 in which each of the reagent container 87 is housed. As described above, in reagent rack 86, the position information 86d including the position information of each of the holders 86b is provided adjacent to each of the holders 86b. Therefore, when the position information 86d is read together with the reagent identification information 87d by the information reading apparatus 700, the controller 57 can specify the position of each of the reagent container 87 and store the reagent ID in association with the position information of the holders 86b. When the reagent container 87 is not accommodated in one of the holders 86b, the absence information 86e is read and information indicating that the reagent container 87 is not accommodated in one of the holders 86b is stored.

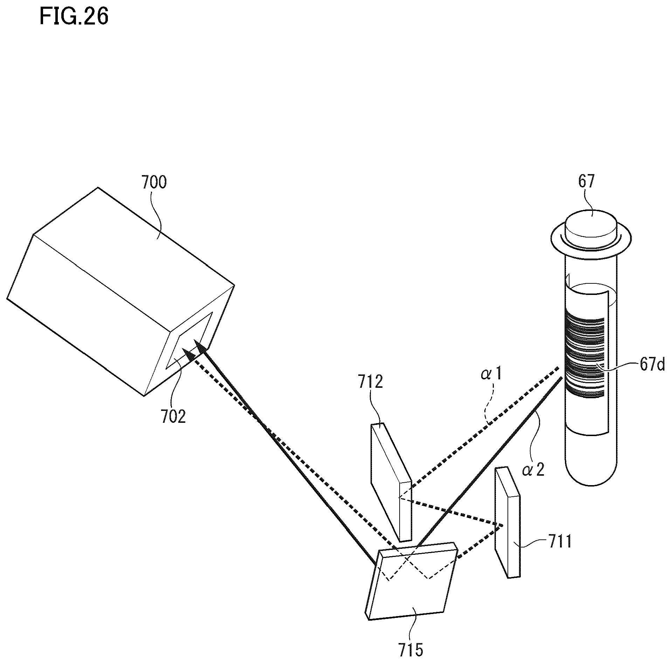

FIG. 26 shows a modification of the above embodiment in which an additional mirror 715 is arranged between the information reading apparatus 700 and the sample container 67. The mirror 715 is a reflection member that bends the first reflected light (optical axis α1) bent by the first mirror 711 and the second mirror 712 and the second reflected light (optical axis α2) directly incident from the sample container 67 and guides them in the direction of the information reading apparatus 700. Further, the mirror 715 bends the light emitted from the information reading apparatus 700 to enable the sample container 67 to be irradiated with the light.

Unlike the first mirror 711 and the second mirror 712, the mirror 715 does not increase the difference between the distances of the optical paths of the optical axis α1 of the first reflected light and the optical axis α2 of the second reflected light. This leads reflected light to the information reading apparatus 700 which is not arranged to face the sample container 67. In this case, the information reading apparatus 700 reads the sample identification information 67d from the second reflected light (optical axis α2) whose optical axis is bent a smaller number of times than the first reflected light. The reagent identification information 87d of the reagent container 87 is read from the first reflected light (optical axis α1).

In the embodiment illustrated in FIG. 26, the mirror 715 is placed on the same horizontal plane as the first mirror 711, the second mirror 712, and the sample identification information 67d, but the information reading apparatus 700 is placed above the horizontal plane. Therefore, the reflecting surface of the mirror 715 is inclined vertically upward. The information reading apparatus 700 may be placed below the horizontal plane, and the mirror 715 may be inclined vertically downward. By using the mirror 715, it is possible to increase the degree of freedom of arrangement of the information reading apparatus 700.

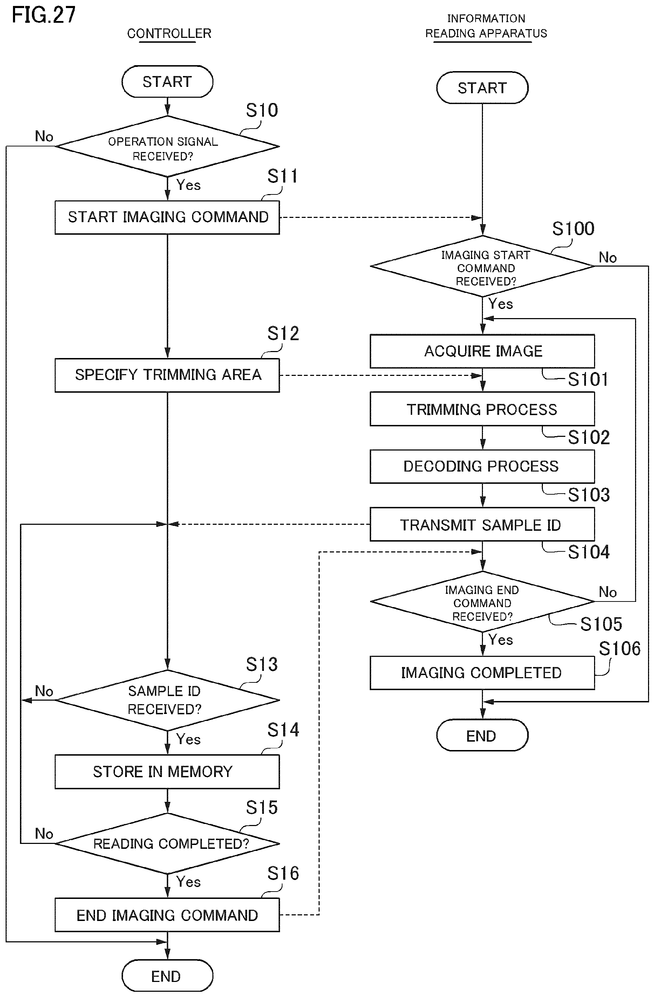

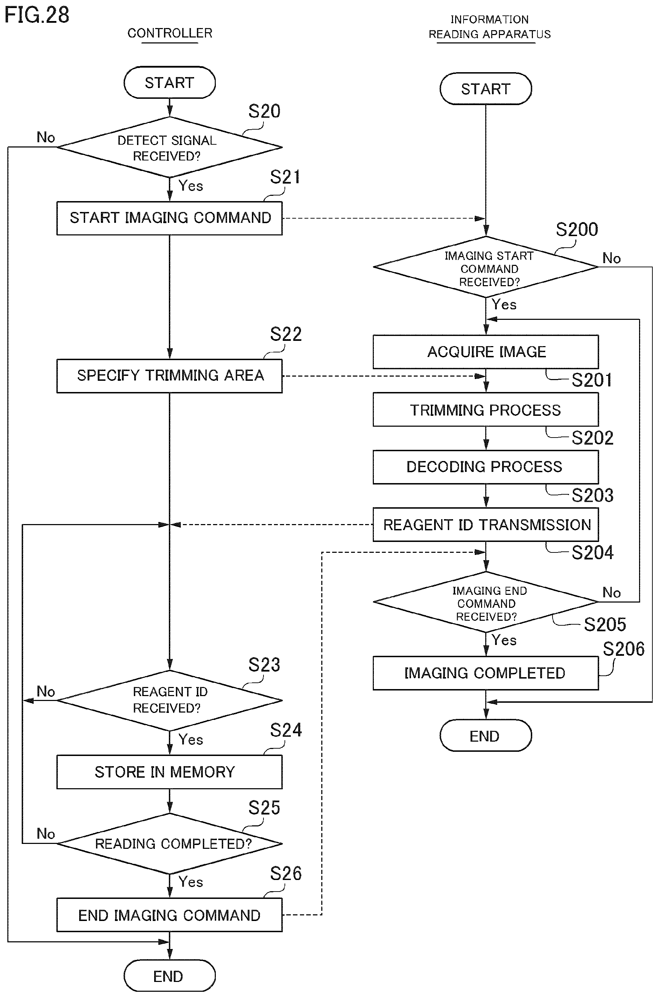

Hereinafter, an example of a method of reading the identification information of the sample container 67 and the reagent container 87 will be described with reference to FIGS. 27 and 28.

FIG. 27 is a flowchart showing a process of reading the sample identification information 67d, and shows operations of the controller 57 and the information reading apparatus 700. In the example illustrated in FIG. 27, in a state where the sample rack tray 65 is pulled out from sample rack storage 50, the sample rack 66 holding the plurality of the sample container 67 is placed on the sample rack tray 65, and the sample rack tray 65 is introduced into sample rack storage 50. At this time, the sample identification information 67d is read.

In step S10, the controller 57 receives an operation signal of the instruction button of the monitor 40 (Yes in step S10). Upon receiving the operation signal, the controller 57 starts a series of information reading steps together with the information reading apparatus 700. When the operation signal of the instruction button is not received (No in step S10), the process does not proceed to the next step S11.

Upon receiving the operation signal of the instruction button of the monitor 40, the controller 57 transmits a control signal to the drive mechanism 521 of the sample rack storage 50. Then, the sample rack tray 65 moves toward the inside of the sample rack storage 50. Preferably, the drive mechanism 521 intermittently drives the motor 530 under the control of the controller 57 to move the sample rack tray 65 while temporarily stopping each of the sample container 67 in an area in front of the sample rack storage 50.

In step S11, the controller 57 transmits an imaging start control signal (imaging start command) to the information reading apparatus 700. Upon receiving a control signal to start imaging from the controller 57 (Yes in step S100), the information reading apparatus 700 emits light from the light source 701, starts imaging the area in front of the sample rack storage 50 through which the sample container 67 passes, and acquires an image 800 including the sample container 67 (step S101). When the control signal for starting imaging is not received (No in step S100), the process does not proceed to the next step S101.

In step S12, the controller 57 transmits a control signal for designating a trimming area of the image to the information reading apparatus 700. When the sample identification information 67d is read, the image 802 of the direct light generated by the second light receiving region 704 of the light receiver 702 is used. Therefore, the controller 57 designates, for example, the image 802 as a target of the decoding process. Since the image of the sample identification information 67d in the image 802 is a sharp image in focus, the sample identification information 67d can be accurately read, and the processing speed is increased by narrowing the processing range.

In response to the designation of the trimming area from the controller 57, the information reading apparatus 700 performs a trimming process of deleting the image 801 generated by the first light receiving region 703 from the entire image 800 and leaving the image 802 (step S102). Next, a decoding process is performed using the image 802, the sample identification information 67d is extracted, and sample ID is read (step S103). Then, the information of the read sample ID is transmitted to the controller 57 (step S104). When the sample container 67 is not accommodated in holder 66b of the sample rack 66, the information reading apparatus 700 transmits absence information of the sample container 67 indicating that holder 66b is empty to the controller 57.

In step S13, the controller 57 receives the information of the sample ID from the information reading apparatus 700 (Yes in step S13). Next, in step S14, the controller 57 stores sample ID of the sample container 67 in the memory in association with the position information of holder 66b of the sample rack 66 in which the sample container 67 is accommodated. When the absence information of the sample container 67 indicating that holder 66b is empty is received, the controller 57 stores the information in the memory.

In step S15, the controller 57 determines whether reading of the identification information of all the sample container 67 and the sample rack 66 is completed. In the present embodiment, six sample containers 67 can be accommodated in the sample rack 66. Therefore, when the controller 57 receives sample rack ID and six sample IDs, the controller 57 may determine that reading of all the identification information is completed. When the absence information of the sample container 67 is included in the information received from the information reading apparatus 700, the completion determination is performed by subtracting the number of the absence information from 6.

In step S16, the controller 57 transmits an imaging end control signal (imaging end command) to the information reading apparatus 700. When the information reading apparatus 700 receives the control signal for ending the imaging from the controller 57 (Yes in step S105), the information reading apparatus 700 ends the imaging (step S106). The information reading apparatus 700 continues imaging until receiving a control signal for ending imaging from the controller 57, and repeats steps S101 to S104.

When the controller 57 receives detect signal of the sample rack 66 from the sensor 534, the controller 57 may transmit a control signal for starting imaging to the information reading apparatus 700. In this case, for example, when the sample rack tray 65 is empty and the sample rack 66 is not subjected to detection, there is an advantage that useless imaging is not performed. When the controller 57 receives a detect signal of the sample rack tray 65 from the sensor 533, the controller 57 may transmit an imaging end control signal to the information reading apparatus 700.

FIG. 28 is a flowchart showing a process of reading the reagent identification information 87d, and shows operations of the controller 57 and the information reading apparatus 700. In the example illustrated in FIG. 28, in a state where the reagent rack tray 85 is pulled out from the reagent rack storage 52, the reagent rack 86 holding the plurality of the reagent container 87 is placed on the reagent rack tray 85, and the reagent rack tray 85 is introduced into the reagent rack storage 52. At this time, the reagent identification information 87d is read.

In step S20, the controller 57 receives detect signal of the reagent rack tray 85 from the sensor 570 (Yes in step S20). Upon receiving the operation signal, the controller 57 starts a series of information reading steps together with the information reading apparatus 700. When detect signal of the sensor 570 is not received (No in step S20), the process does not proceed to the next step S21. In step S21, the controller 57 transmits an imaging start control signal (imaging start command) to the information reading apparatus 700.

When the information reading apparatus 700 receives a control signal for starting imaging from the controller 57 (Yes in step S200), the information reading apparatus 700 emits light from the light source 701, starts imaging an area in front of the reagent rack storage 52 through which the reagent container 87 passes, and acquires an image 900 including the reagent container 87 (step S201). When the control signal for starting imaging is not received (No in step S200), the process does not proceed to the next step S201.

In step S22, the controller 57 transmits a control signal specifying a trimming area of the image to the information reading apparatus 700. When the reagent identification information 87d is read, the image 901 of the direct light generated by the first light receiving region 703 of the light receiver 702 is used. Therefore, the controller 57 designates, for example, the image 901 as a target of the decoding process. Since the image of the reagent identification information 87d in the image 901 is a sharp image in focus, the reagent identification information 87d can be accurately read, and the processing speed is increased by narrowing the processing range.

In response to the designation of the trimming area from the controller 57, the information reading apparatus 700 performs a trimming process of deleting the image 902 generated by the second light receiving region 704 from the entire image 900 and leaving the image 901 (step S202). Next, a decoding process is performed using the image 901, the reagent identification information 87d is extracted, and the reagent ID is read (step S203). Then, the information of the read sample ID is transmitted to the controller 57 (step S204).

Since the reagent rack tray 85 is manually moved, position information 86d for specifying the position of each of the reagent container 87 (holders 86b) is provided adjacent to each of the holders 86b in reagent rack 86. The information reading apparatus 700 reads the position information 86d together with the reagent identification information 87d. Absence information 86e is provided in each of the holders 86b. When the reagent container 87 is not accommodated in each of the holders 86b, the information reading apparatus 700 reads the absence information 86e and transmits absence information of the reagent container 87 indicating that the holders 86b are empty to the controller 57.

In step S23, the controller 57 receives the information of the reagent ID and the position information thereof from the information reading apparatus 700 (Yes in step S23). Next, in step S24, the controller 57 stores the reagent ID of the reagent container 87 in the memory in association with the position information of the holders 86b of the reagent rack 86 in which the reagent container 87 is accommodated. When the absence information of the reagent container 87 indicating that the holders 86b is empty is received, the controller 57 stores the information in the memory.

In step S25, the controller 57 determines whether reading of the identification information of all the reagent container 87 is completed. In the present embodiment, since six reagent container 87 can be accommodated in reagent rack 86, the controller 57 may determine that reading of all the identification information is completed when receiving six reagent IDs. When the absence information of the reagent container 87 is included in the information received from the information reading apparatus 700, the completion determination is performed by subtracting the number of the absence information from 6.

In step S26, the controller 57 transmits an imaging end control signal (imaging end command) to the information reading apparatus 700. When the information reading apparatus 700 receives the control signal for ending the imaging from the controller 57 (Yes in step S205), the information reading apparatus 700 ends the imaging (step S206). The information reading apparatus 700 continues imaging until receiving a control signal for ending imaging from the controller 57, and repeats steps S201 to S204.

As described above, in the information reading method in the sample measuring apparatus 1, the reagent rack 86 holding the reagent container 87 is placed on the reagent rack tray 85 and installed in the reagent rack storage 52, and the position information 86d and the reagent identification information 87d are read from the first reflected light acquired via the first flection unit 710. The sample rack 66 reflected light holding the sample container 67 is placed on the sample rack tray 65 and installed in sample rack storage 50, and identification information is read from a second reflected light whose optical axis is bent a smaller number of times than the first or whose optical axis is not bent.

Hereinafter, the second flection unit 720 and the configuration related thereto will be described in detail with reference to FIGS. 29 to 31.

FIG. 29 is a diagram illustrating a state in which the emitted light (optical axis β) emitted from the information reading apparatus 700 is guided to the outside of the housing 10 and the identification information (third identification information) of the container 730 (third object) is read by the function of the second flection unit 720. The third object whose identification information is read by the function of the second flection unit 720 is not limited to reagent, sample, calibrator, control specimen, and a container containing a cleaning agent or the like, and may be a document on which identification information is written, screen of an electronic device to which identification information is output, or the like. For example, when the identification information is not provided on the container, the container may be placed in sample rack storage 50 after the identification information of the container written on the document is read by the function of the second flection unit 720.

The third identification information is, for example, a one-dimensional code or a two-dimensional code including at least one piece of information selected from reagent information, sample information, calibrator information, control information, and detergent information. Examples of the information on the cleaning agent include an ID indicating that the cleaning agent is a genuine product.

As shown in FIG. 29, the second flection unit 720 is configured to bend the optical axis β of the emission light emitted from the information reading apparatus 700 to guide the emission light to the outside of the device, and bend the optical axis of reflected light from the container 730 placed outside the device to guide the emission light to the information reading apparatus 700. By the function of the second flection unit 720, the identification information of the container 730 can be read using the information reading apparatus 700 installed inside the housing 10. In order to read the identification information outside the device, the sample measuring apparatus may be provided with a handy barcode reader. However, in the case of the sample measuring apparatus 1, such a reader is unnecessary.

The second flection unit 720 includes a movable mirror 721 that bends emitted light. In the present embodiment, the mirror 721 is fixed to a movable plate 724 movably supported inside the housing 10, and the mirror 721 moves in conjunction with the movable plate 724. An opening 722 through which the optical axis β bent by the mirror 721 passes is formed in the front surface 20 of the housing 10. Therefore, the container 730 is placed to face the opening 722 so that the identification information is arranged on the optical axis β in the vicinity of the front surface 20. For example, a range of 50 mm to 130 mm from the front surface 20 is the depth of field of the information reading apparatus 700.

Light emitted to the container 730 outside the housing 10 is reflected by the container 730 and guided to the light receiver 702 of the information reading apparatus 700 via the mirror 721. Similar to the optical axis β of the emitted light, the optical axis of reflected light from the container 730 is also bent by the function of the mirror 721, and reflected light is incident on the light receiver 702. Depending on the size of the mirror 721, the inclination angle of the mirror 721 with respect to the front surface 700a of the information reading apparatus 700, and the like, reflected light of the container 730 can be incident on the entire region of the light receiver 702 or can be incident on either the left or right region of the light receiver 702.

The mirror 721 is placed along the inner surface of the front surface 20 when not in use, particularly when the identification information such as the sample container 67 or the reagent container 87 is read (see FIG. 2). In the present embodiment, the mirror 721 is provided between the front surface 700a of the information reading apparatus 700 and the first mirror 711 of the first flection unit 710 in the left-right direction Y of the device. The second flection unit 720 is configured to be able to move the mirror 721 between a use state in which the mirror 721 is positioned between the front surface 700a and the first mirror 711 and a non-use state in which the mirror 721 is along the inner surface of the front surface 20.

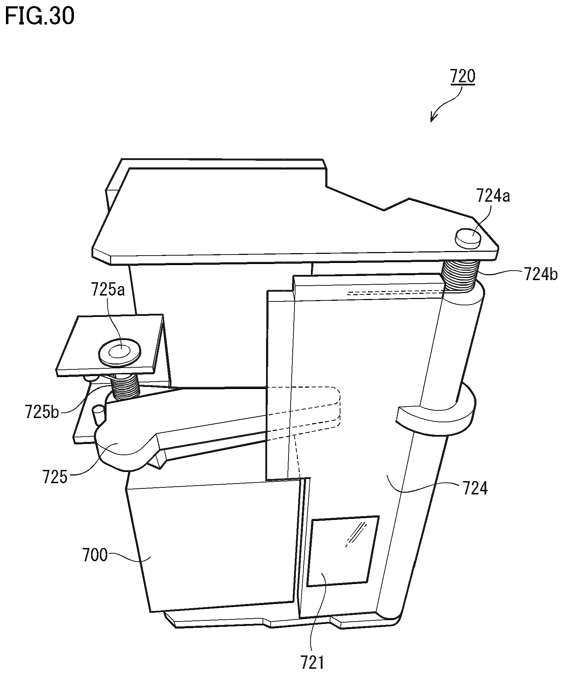

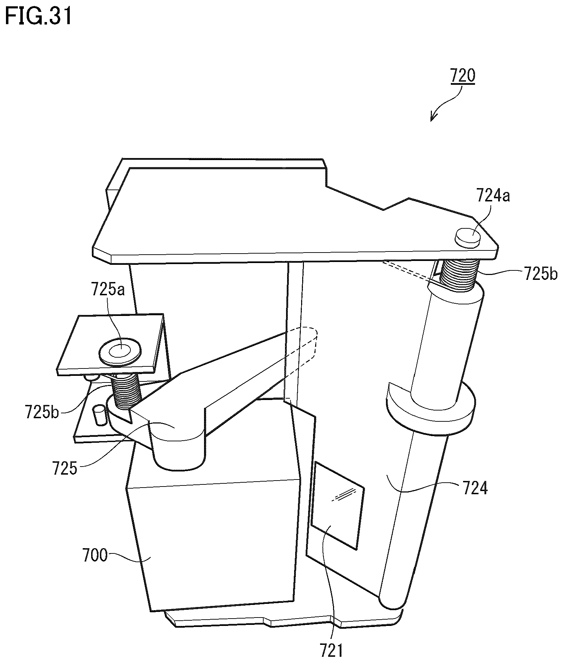

FIGS. 30 and 31 are diagrams illustrating the structure of the second flection unit 720, and illustrate a state in which the front surface 20 of the housing 10 is removed. As illustrated in FIGS. 30 and 31, the second flection unit 720 includes a movable plate 724 that movably supports the mirror 721, a support shaft 724a that rotatably supports the movable plate 724, and a bias spring 724b that moves the movable plate 724 toward the front surface 20. The mirror 721 is fixed to a front surface of the movable plate 724 facing the front surface 20 side, and is movable between a non-use state illustrated in FIG. 30 and a use state illustrated in FIG. 31 by rotation of the movable plate 724.

The movable plate 724 is placed along the inner surface of the front surface 20 in a state where the second flection unit 720 is not used, and closes the opening 722 formed in the front surface 20 through which the optical axis β passes. In the use state of the second flection unit 720, the movable plate 724 moves to the rear side of the apparatus, and the mirror 721 is separated from the inner surface of the front surface 20 and faces the information reading apparatus 700 and the opening 722. When the second flection unit 720 is not in use, the mirror 721 is placed so as to close the opening 722, and the mirror 721 is visible when the lid 32 is opened. As described above, since the opening 722 is formed in the portion of the front surface 20 covered with the lid 32, it is necessary to open the lid 32 when reading the identification information of the container 730.

The second flection unit 720 further includes an arm 725 that supports the movable plate 724 from behind, a support shaft 725a that rotatably supports the arm 725, and a bias spring 725b that moves the arm 725 toward the front surface 20. The second flection unit 720 includes a control lever 726 (see FIGS. 4 and 29) that presses the movable plate 724. An opening 723 in which a control lever 726 is placed is formed in the front surface 20 of the housing 10.

The control lever 726 is configured to press the movable plate 724 toward the inside of the housing 10 and to be hooked on the movable plate 724 or the front surface 20. A portion of the control lever 726 that is operated by the user protrudes from the opening 723 to the outside of the housing 10, and a portion of the control lever 726 that presses the movable plate 724 protrudes from the opening 723 to the inside of the housing 10. When the control lever 726 presses the movable plate 724, the movable plate 724 rotates against the biasing force of the springs 724b and 725b and moves away from the inner surface of the front surface 20, thereby opening the opening 722. Then, the optical axis β of the light emitted from the information reading apparatus 700 is guided to the outside of the device.

In the use state shown in FIGS. 29 and 31, the movable plate 724 protrudes between the front surface 700a of the information reading apparatus 700 and the first mirror 711 of the first flection unit 710, and the mirror 721 faces the front surface 700a and the opening 722. For example, the mirror 721 is inclined at an angle of about 45° with respect to the front surface 700a and the front surface 20. In the present embodiment, the control lever 726 is hooked on the movable plate 724 or the front surface 20. As a result, the mirror 721 is fixed in the above-described arrangement, and the mirror 721 is in a locked state in which the mirror 721 does not move even when the hand is released from the control lever 726. When the locked state is released by the operation of the control lever 726, the movable plate 724 is brought into the non-use state shown in FIG. 30 by the biasing force of the springs 724b and 725b.

As described above, according to sample measuring apparatus 1, by the function of the first flection unit 710, it is possible to read the identification information such as the sample container 67 and the reagent container 87 without automatically adjusting the focal range for areas having different geometric distances from the information reading apparatus 700. Therefore, a mechanical component or an electronic component for automatically adjusting the focal range is not required, and the apparatus cost can be reduced. In addition, it is easy to reduce the size of the apparatus, and the frequency of failure is also reduced. Although a certain period of time is required for the automatic adjustment of the focal range, sample measuring apparatus 1 does not change the focal range, and thus can quickly read the identification information.

Further, by providing the second flection unit 720, the identification information can be read outside the device by using the information reading apparatus 700 installed inside the housing 10. Although a sample measuring apparatus including a handy barcode reader is known, sample measuring apparatus 1 does not require such a reader.

The above embodiment may be modified in design as appropriate without departing from the object of the present invention. For example, in the above embodiment, sample rack storage 50 is provided at a position farther from the information reading apparatus 700 than the reagent rack storage 52, but the reagent rack storage 52 may be provided at a position farther from the information reading apparatus 700 than sample rack storage 50. In the above embodiment, the reagent rack 86 having no rack ID is exemplified. However, reagent rack may be provided with a one-dimensional code or a two-dimensional code including a rack ID.

In the above embodiment, the first flection unit 710 including two mirrors is exemplified as the flection unit of reflected light. However, a lens that refracts reflected light may be applied to the flection unit . For example, by configuring the flection unit by combining a lens that refracts reflected light and a mirror that bends reflected light, the distance of the light path that is the first optical distance SL1 or SL2 (see FIGS. 23 and 24) of reflected light from the reagent container 87 can be adjusted to approximate the distance of the light path that is the second optical distance KL1 or KL2 (see FIGS. 20 and 21) of the direct light from the sample container 67 by using each of the refracted light (refracted reflected light) and the refracted light (bent reflected light).

The configuration of sample measuring apparatus, the configuration of the information reading apparatus, and the information reading method of the present invention can also be applied to devices that perform blood immunoassay, which is sample measurement other than blood coagulation measurement, blood cell number measurement, biochemical analysis, urine analysis, and the like.

### REFERENCE SIGNS LIST

1 sample measuring apparatus
10 housing
20 front surface
21 rear surface
22 right side surface
23 left side surface
24 upper surface
25 bottom surface
30 housing
31 opening
32 lid
33 opening
34 lid
40 monitor
50 sample rack storage
50a, 50b, 52a, 52b lanes
51 reaction container storage
52 reagent rack storage
53 measuring unit
54 cleaning unit
55 disposal unit
56 power supply unit
57 controller
58 dispenser
60 housing member
60a opening
61 upper surface
62 dispensing hole
63 left side surface
64 right side surface
65 sample rack tray
66 sample rack
66a bottom portion
66b holder
66c partition wall
66d sample rack identification information
67 sample container
67d sample identification information
70 reaction container
71 container rack
80 housing member
81 upper surface
82 dispensing hole
83 cooling unit
84 heat exhaust unit
85 reagent rack tray
86 reagent rack
86a bottom portion
86b holder
86c wall
86d position information
86e absence information
87 reagent container
87d reagent identification information
90 heating unit
91 detecting unit
100 housing member
100a upper surface
101 hole
120 holding hole
121 first holder
122 heat source
130 holding hole
131 second holder
140 light source
141 detecting device
160 cleaning tank
170 disposal outlet
180 vertical wall
190 dispensing device
191 Moving device
200 pipette
201 container holder
202 moving mechanism
210 tip
220 holding arm
250 first moving unit
251 second moving unit
252 interlocking unit
253 drive source
260 plate-shaped member
260a first plate surface
260b second plate surface
270 pipette holding member
271 first lifting member
280 pipe
300 second lifting member
301 biasing member
302 stopper
303 pressing member
304 second guide rail
310 main body
311 arm
320,321 pulley
322 belt
330, 331 belt portion
350 vibrating member
360 heating member
509 base
510 rack placement unit
511 rear light-shielding wall
512 front light-shielding wall
513 pressing part
514 rail
520 slider
521 drive mechanism
530 motor
531 pulley
532 belt
533, 534 sensor
550 rack placement unit
551 wall
552 handle
560 groove
570 sensor
700 Information reading apparatus
700a front surface
701 light source
702 light receiver
703 first light receiving region
704 second light receiving region
710 first flection unit
711 first mirror
712 second mirror
715 mirror
720 second flection unit
721 mirror
722,723 opening
724 movable plate
724a, 725a support shaft
724b, 725b spring
725 arm
726 control lever
730 container
800, 801, 802, 900, 901, and 902 images

## Claims

1. A sample measuring apparatus (1) comprising:
a first setting part (85) on which a first object (86, 87) is installed;
a second setting part (65) on which a second object (66, 67) is installed;
an identification information reader (700) configured to irradiate the first object (86, 87) in the first setting part (85) and the second object (66, 67) in the second setting part (65) with light, and to acquire reflected light, and to read first identification information (87d) provided on the first object (86, 87) and second identification information (66d, 67d) provided on the second object (67); and
a flection unit (710) configured to bend reflected light,
the sample measuring apparatus being **characterized in that**:
the second setting part (65) is placed at a position geometrically farther from the identification information reader (700) than the first setting part (85), and
the identification information reader (700) is configured to read the first identification information (87d) from a first reflected light acquired from the first object (86, 87) via the flection unit (710), and to read the second identification information (66d, 67d) from a second reflected light acquired from the second object (66, 67) not via the flection unit (710),
wherein the second reflected light enters the identification information reader (700) without passing through the flection unit (710),
the first object (86,87) is a first rack or a first container, the second object (66,67) is a second rack or a second container, the first setting part (85) is a first tray, and the second setting part (65) is a second tray.

2. The sample measuring apparatus (1) according to claim 1, wherein
a first optical distance through which the first reflected light passes between the identification information reader (700) and the first setting part (85) is fixed.

3. The sample measuring apparatus (1) according to claim 1, wherein
a second optical distance through which the second reflected light passes between the identification information reader (700) and the second setting part (65) is fixed.

4. The sample measuring apparatus (1) according to claim 1, wherein
a first optical distance that the first reflected light passes between the identification information reader (700) and the first setting part (85) and a second optical distance that the second reflected light passes between the identification information reader (700) and the second setting part (65) are substantially the same.

5. The sample measuring apparatus (1) according to claim 1, wherein
the identification information reader (700) comprises a light receiver (702)configured to receive reflected light, the light receiver (702) comprises a first light receiving region (703) and a second light receiving region (704),
the first light receiving region (703) is configured to receive the first reflected light, and
the second light receiving region (704) is configured to receive the second reflected light.

6. The sample measuring apparatus (1) according to claim 1, wherein
the flection unit (710) comprises at least two mirrors (711, 712).

7. The sample measuring apparatus (1) according to claim 1, wherein
the first identification information and the second identification information comprises a one-dimensional code or a two-dimensional code.

8. The sample measuring apparatus (1) according to claim 1, wherein:
The first object (86, 87) comprises a reagent rack, the first identification information is at least one selected from a one-dimensional code or a two-dimensional code comprising an ID of reagent rack, and a one-dimensional code or a two-dimensional code comprising an ID of a reagent container held in the reagent rack; and
the second object (66, 67) comprises a sample rack, and the second identification information is at least one selected from a one-dimensional code or a two-dimensional code comprising an ID of the sample rack, and a one-dimensional code or a two-dimensional code comprising an ID of a sample container held in the sample rack.

9. The sample measuring apparatus (1) according to claim 8, wherein
the first setting part (85) is configured to install reagent racks.

10. The sample measuring apparatus (1) according to claim 8, wherein
the second setting part (65) is configured to install sample racks.

11. The sample measuring apparatus (1) according to claim 1, further comprising
a second flection unit (720) is configured to bend the light emitted from the identification information reader (700) and to guide the light to a third object (730) outside of the sample measuring apparatus (1); wherein
the second flection unit (720) is configured to bend a third reflected light from the third object (730) and to guide the light to the identification information reader (700); and
the identification information reader (700) is configured to read third identification information provided on the third object (730) from the third reflected light.

12. The sample measuring apparatus (1) according to claim 11, further comprising a housing (10) comprising an opening, wherein
the second flection unit (720) comprises:
a movable plate (724) for opening and closing the opening; and
a mirror (721) that is fixed to a front surface of the movable plate (724), and configured to guide light emitted from the identification information reader (700) through the opening to outside of the sample measuring apparatus (1).

13. The sample measuring apparatus (1) according to claim 11, wherein
the third identification information comprises a one-dimensional code or a two-dimensional code comprising at least one of information selected from reagent information, sample information, calibrator information, control information, and detergent information.

14. An information reading method in an sample measuring apparatus (1) comprising a first setting part (85), a second setting part (65), an identification information reader (700), and a flection unit (710), wherein the second setting part (65) is placed at a position geometrically farther from the identification information reader (700) than the first setting part (85), the method comprising:
installing a first object (86, 87) provided with first identification information (87d) in the first setting part (85);
installing a second object (66, 67) provided with second identification information (66d, 67d) in the second setting part (65);
irradiating the first object (86, 87) in the first setting part (85) and the second object (66, 67) in the second setting part with light (65);
reading the first identification information (87d) of the first object (86, 87) from a first reflected light acquired from the first object (86, 87) via the flection unit (710); and
reading the second identification information (66d, 67d) of the second object (66, 67) from a second reflected light acquired from the second object (66, 67) not via the flection unit (710); wherein
the second reflected light enters the identification information reader (700) without passing through the flection unit (710),
the first object is a first rack or a first container, the second object is a second rack or a second container, the first setting part (85) is a first tray, and the second setting part (65) is a second tray.

## Patentansprüche

1. Probenmessvorrichtung (1), umfassend:
ein erstes Aufnahmeteil (85), auf dem ein erstes Objekt (86, 87) installiert ist;
ein zweites Aufnahmeteil (65), auf dem ein zweites Objekt (66, 67) installiert ist;
einen Identifikationsinformationsleser (700), der konfiguriert ist, das erste Objekt (86, 87) in dem ersten Aufnahmeteil (85) und das zweite Objekt (66, 67) in dem zweiten Aufnahmeteil (65) mit Licht zu bestrahlen, und reflektiertes Licht zu erfassen, und erste Identifikationsinformation (87d), die auf dem ersten Objekt (86, 87) vorgesehen ist, und zweite Identifikationsinformation (66d, 67d), die auf dem zweiten Objekt (67) vorgesehen ist, zu lesen;
und
eine Ablenkeinheit (710), die konfiguriert ist, reflektiertes Licht abzulenken,
**dadurch gekennzeichnet, dass**
das zweite Aufnahmeteil (65) an einer Position angeordnet ist, die geometrisch weiter von dem Identifikationsinformationsleser (700) entfernt ist als das erste Aufnahmeteil (85), und
der Identifikationsinformationsleser (700) konfiguriert ist, die erste Identifikationsinformation (87d) aus einem ersten reflektierten Licht, das von dem ersten Objekt (86, 87) über die Ablenkeinheit (710) erfasst wird, zu lesen, und die zweite Identifikationsinformation (66d, 67d) aus einem zweiten reflektierten Licht, das von dem zweiten Objekt (66, 67) nicht über die Ablenkeinheit (710) erfasst wird, zu lesen,
wobei das zweite reflektierte Licht in den Identifikationsinformationsleser (700) eintritt, ohne die Ablenkeinheit (710) zu durchlaufen,
das erste Objekt (86, 87) ein erstes Gestell oder ein erster Behälter ist, das zweite Objekt (66, 67) ein zweites Gestell oder ein zweiter Behälter ist, das erste Aufnahmeteil (85) eine erste Schale ist und das zweite Aufnahmeteil (65) eine zweite Schale ist.

2. Probenmessvorrichtung (1) nach Anspruch 1, wobei eine erste optische Distanz, über die das erste reflektierte Licht zwischen dem Identifikationsinformationsleser (700) und dem ersten Aufnahmeteil (85) läuft, fixiert ist.

3. Probenmessvorrichtung (1) nach Anspruch 1, wobei eine zweite optische Distanz, über die das zweite reflektierte Licht zwischen dem Identifikationsinformationsleser (700) und dem zweiten Aufnahmeteil (65) läuft, fixiert ist.

4. Probenmessvorrichtung (1) nach Anspruch 1, wobei eine erste optische Distanz, die das erste reflektierte Licht zwischen dem Identifikationsinformationsleser (700) und dem ersten Aufnahmeteil (85) läuft, und eine zweite optische Distanz, die das zweite reflektierte Licht zwischen dem Identifikationsinformationsleser (700) und dem zweiten Aufnahmeteil (65) läuft, im Wesentlichen gleich sind.

5. Probenmessvorrichtung (1) nach Anspruch 1, wobei
der Identifikationsinformationsleser (700) einen Lichtempfänger (702) umfasst, der konfiguriert ist, reflektiertes Licht zu empfangen, wobei der Lichtempfänger (702) einen ersten Lichtempfangsbereich (703) und einen zweiten Lichtempfangsbereich (704) umfasst,
der erste Lichtempfangsbereich (703) konfiguriertist, das erste reflektierte Licht zu empfangen, und
der zweite Lichtempfangsbereich (704) konfiguriert ist, das zweite reflektierte Licht zu empfangen.

6. Probenmessvorrichtung (1) nach Anspruch 1, wobei die Ablenkeinheit (710) mindestens zwei Spiegel (711, 712) umfasst.

7. Probenmessvorrichtung (1) nach Anspruch 1, wobei die erste Identifikationsinformation und die zweite Identifikationsinformation einen eindimensionalen Code oder einen zweidimensionalen Code umfassen.

8. Probenmessvorrichtung (1) nach Anspruch 1, wobei:
das erste Objekt (86, 87) ein Reagenzgestell umfasst, wobei die erste Identifikationsinformation mindestens eine ist, ausgewählt aus einem eindimensionalen Code oder einem zweidimensionalen Code, der eine ID des Reagenzgestells umfasst, und einem eindimensionalen Code oder einem zweidimensionalen Code, der eine ID eines in dem Reagenzgestell gehaltenen Reagenzbehälters umfasst;
und
das zweite Objekt (66, 67) ein Probengestell umfasst, und die zweite Identifikationsinformation mindestens eine ist, ausgewählt aus einem eindimensionalen Code oder einem zweidimensionalen Code, der eine ID des Probengestells umfasst, und einem eindimensionalen Code oder einem zweidimensionalen Code, der eine ID eines in dem Probengestell gehaltenen Probenbehälters umfasst.

9. Probenmessvorrichtung (1) nach Anspruch 8, wobei das erste Aufnahmeteil (85) konfiguriert ist, Reagenzgestelle zu installieren.

10. Probenmessvorrichtung (1) nach Anspruch 8, wobei das zweite Aufnahmeteil (65) konfiguriert ist, Probengestelle zu installieren.

11. Probenmessvorrichtung (1) nach Anspruch 1, ferner umfassend eine zweite Ablenkeinheit (720), die konfiguriert ist, das von dem Identifikationsinformationsleser (700) emittierte Licht abzulenken und das Licht zu einem dritten Objekt (730) außerhalb der Probenmessvorrichtung (1) zu leiten;
wobei
die zweite Ablenkeinheit (720) konfiguriert ist, ein drittes reflektiertes Licht von dem dritten Objekt (730) abzulenken und das Licht zu dem Identifikationsinformationsleser (700) zu leiten;
und
der Identifikationsinformationsleser (700) konfiguriert ist, dritte Identifikationsinformation, die auf dem dritten Objekt (730) vorgesehen sind, aus dem dritten reflektierten Licht zu lesen.

12. Probenmessvorrichtung (1) nach Anspruch 11, ferner umfassend ein Gehäuse (10) mit einer Öffnung, wobei
die zweite Ablenkeinheit (720) umfasst:
eine bewegliche Platte (724) zum Öffnen und Schließen der Öffnung;
und
einen Spiegel (721), der an einer Vorderfläche der beweglichen Platte (724) befestigt und konfiguriert ist, von dem Identifikationsinformationsleser (700) emittiertes Licht durch die Öffnung nach außerhalb der Probenmessvorrichtung (1) zu leiten.

13. Probenmessvorrichtung (1) nach Anspruch 11, wobei die dritte Identifikationsinformation einen eindimensionalen Code oder einen zweidimensionalen Code umfasst, der mindestens eine Information, ausgewählt aus Reagenzinformation, Probeninformation, Kalibratorinformation, Kontrollinformation und Detergenzinformation, umfasst.

14. Informationsleseverfahren in einer Probenmessvorrichtung (1), umfassend ein erstes Aufnahmeteil (85), ein zweites Aufnahmeteil (65), einen Identifikationsinformationsleser (700) und eine Ablenkeinheit (710), wobei das zweite Aufnahmeteil (65) an einer Position angeordnet ist, die geometrisch weiter von dem Identifikationsinformationsleser (700) entfernt ist als das erste Aufnahmeteil (85), wobei das Verfahren umfasst:
Installieren eines ersten Objekts (86, 87), das mit einer ersten Identifikationsinformation (87d) versehen ist, in dem ersten Aufnahmeteil (85);
Installieren eines zweiten Objekts (66, 67), das mit einer zweiten Identifikationsinformation (66d, 67d) versehen ist, in dem zweiten Aufnahmeteil (65);
Bestrahlen des ersten Objekts (86, 87) in dem ersten Aufnahmeteil (85) und des zweiten Objekts (66, 67) in dem zweiten Aufnahmeteil (65) mit Licht;
Lesen der ersten Identifikationsinformation (87d) des ersten Objekts (86, 87) aus einem ersten reflektierten Licht, das von dem ersten Objekt (86, 87) über die Ablenkeinheit (710) erfasst wird;
und
Lesen der zweiten Identifikationsinformation (66d, 67d) des zweiten Objekts (66, 67) aus einem zweiten reflektierten Licht, das von dem zweiten Objekt (66, 67) nicht über die Ablenkeinheit (710) erfasst wird;
wobei
das zweite reflektierte Licht in den Identifikationsinformationsleser (700) eintritt, ohne die Ablenkeinheit (710) zu durchlaufen,
das erste Objekt ein erstes Gestell oder ein erster Behälter ist, das zweite Objekt ein zweites Gestell oder ein zweiter Behälter ist, das erste Aufnahmeteil (85) eine erste Schale ist und das zweite Aufnahmeteil (65) eine zweite Schale ist.

## Revendications

1. Un appareil de mesure d'échantillons (1) comprenant:
une première partie de placement (85) sur laquelle un premier objet (86, 87) est installé;
une deuxième partie de placement (65) sur laquelle un deuxième objet (66, 67) est installé;
un lecteur d'informations d'identification (700) configuré pour irradier le premier objet (86, 87) dans la première partie de placement (85) et le deuxième objet (66, 67) dans la deuxième partie de placement (65) avec de la lumière, et pour acquérir de la lumière réfléchie, et pour lire une première information d'identification (87d) fournie sur le premier objet (86, 87) et une deuxième information d'identification (66d, 67d) fournie sur le deuxième objet (67); et une unité de déflexion (710) configurée pour dévier la lumière réfléchie,
l'appareil de mesure d'échantillons étant **caractérisé en ce que**:
la deuxième partie de placement (65) est placée à une position géométriquement plus éloignée du lecteur d'informations d'identification (700) que la première partie de placement (85), et le lecteur d'informations d'identification (700) est configuré pour lire la première information d'identification (87d) à partir d'une première lumière réfléchie acquise du premier objet (86, 87) via l'unité de déflexion (710), et pour lire la deuxième information d'identification (66d, 67d) à partir d'une deuxième lumière réfléchie acquise du deuxième objet (66, 67) non via l'unité de déflexion (710), dans lequel la deuxième lumière réfléchie entre dans le lecteur d'informations d'identification (700) sans passer par l'unité de déflexion (710), le premier objet (86, 87) est un premier râtelier ou un premier récipient, le deuxième objet (66, 67) est un deuxième râtelier ou un deuxième récipient, la première partie de placement (85) est un premier plateau, et la deuxième partie de placement (65) est un deuxième plateau.

2. L'appareil de mesure d'échantillons (1) selon la revendication 1, dans lequel une première distance optique à travers laquelle la première lumière réfléchie passe entre le lecteur d'informations d'identification (700) et la première partie de placement (85) est fixe.

3. L'appareil de mesure d'échantillons (1) selon la revendication 1, dans lequel une deuxième distance optique à travers laquelle la deuxième lumière réfléchie passe entre le lecteur d'informations d'identification (700) et la deuxième partie de placement (65) est fixe.

4. L'appareil de mesure d'échantillons (1) selon la revendication 1, dans lequel une première distance optique que la première lumière réfléchie passe entre le lecteur d'informations d'identification (700) et la première partie de placement (85) et une deuxième distance optique que la deuxième lumière réfléchie passe entre le lecteur d'informations d'identification (700) et la deuxième partie de placement (65) sont sensiblement les mêmes.

5. L'appareil de mesure d'échantillons (1) selon la revendication 1, dans lequel le lecteur d'informations d'identification (700) comprend un récepteur de lumière (702) configuré pour recevoir la lumière réfléchie, le récepteur de lumière (702) comprend une première région de réception de lumière (703) et une deuxième région de réception de lumière (704), la première région de réception de lumière (703) est configurée pour recevoir la première lumière réfléchie, et la deuxième région de réception de lumière (704) est configurée pour recevoir la deuxième lumière réfléchie.

6. L'appareil de mesure d'échantillons (1) selon la revendication 1, dans lequel l'unité de déflexion (710) comprend au moins deux miroirs (711, 712).

7. L'appareil de mesure d'échantillons (1) selon la revendication 1, dans lequel la première information d'identification et la deuxième information d'identification comprennent un code unidimensionnel ou un code bidimensionnel.

8. L'appareil de mesure d'échantillons (1) selon la revendication 1, dans lequel: le premier objet (86, 87) comprend un râtelier de réactifs, la première information d'identification est au moins une sélectionnée parmi un code unidimensionnel ou un code bidimensionnel comprenant un ID du râtelier de réactifs, et un code unidimensionnel ou un code bidimensionnel comprenant un ID d'un récipient de réactifs maintenu dans le râtelier de réactifs; et le deuxième objet (66, 67) comprend un râtelier d'échantillons, et la deuxième information d'identification est au moins une sélectionnée parmi un code unidimensionnel ou un code bidimensionnel comprenant un ID du râtelier d'échantillons, et un code unidimensionnel ou un code bidimensionnel comprenant un ID d'un récipient d'échantillons maintenu dans le râtelier d'échantillons.

9. L'appareil de mesure d'échantillons (1) selon la revendication 8, dans lequel la première partie de placement (85) est configurée pour installer des râteliers de réactifs.

10. L'appareil de mesure d'échantillons (1) selon la revendication 8, dans lequel la deuxième partie de placement (65) est configurée pour installer des râteliers d'échantillons.

11. L'appareil de mesure d'échantillons (1) selon la revendication 1, comprenant en outre une deuxième unité de déflexion (720) configurée pour dévier la lumière émise par le lecteur d'informations d'identification (700) et pour guider la lumière vers un troisième objet (730) à l'extérieur de l'appareil de mesure d'échantillons (1); dans lequel la deuxième unité de déflexion (720) est configurée pour dévier une troisième lumière réfléchie provenant du troisième objet (730) et pour guider la lumière vers le lecteur d'informations d'identification (700); et le lecteur d'informations d'identification (700) est configuré pour lire une troisième information d'identification fournie sur le troisième objet (730) à partir de la troisième lumière réfléchie.

12. L'appareil de mesure d'échantillons (1) selon la revendication 11, comprenant en outre un boîtier (10) comprenant une ouverture, dans lequel la deuxième unité de déflexion (720) comprend : une plaque mobile (724) pour ouvrir et fermer l'ouverture; et un miroir (721) qui est fixé à une surface avant de la plaque mobile (724), et configuré pour guider la lumière émise par le lecteur d'informations d'identification (700) à travers l'ouverture vers l'extérieur de l'appareil de mesure d'échantillons (1).

13. L'appareil de mesure d'échantillons (1) selon la revendication 11, dans lequel la troisième information d'identification comprend un code unidimensionnel ou un code bidimensionnel comprenant au moins une information sélectionnée parmi l'information de réactif, l'information d'échantillon, l'information de calibreur, l'information de contrôle et l'information de détergent.

14. Un procédé de lecture d'informations dans un appareil de mesure d'échantillons (1) comprenant une première partie de placement (85), une deuxième partie de placement (65), un lecteur d'informations d'identification (700) et une unité de déflexion (710), dans lequel la deuxième partie de placement (65) est placée à une position géométriquement plus éloignée du lecteur d'informations d'identification (700) que la première partie de placement (85), le procédé comprenant: l'installation d'un premier objet (86, 87) pourvu d'une première information d'identification (87d) dans la première partie de placement (85); l'installation d'un deuxième objet (66, 67) pourvu d'une deuxième information d'identification (66d, 67d) dans la deuxième partie de placement (65); l'irradiation du premier objet (86, 87) dans la première partie de placement (85) et du deuxième objet (66, 67) dans la deuxième partie de placement (65) avec de la lumière; la lecture de la première information d'identification (87d) du premier objet (86, 87) à partir d'une première lumière réfléchie acquise du premier objet (86, 87) via l'unité de déflexion (710) ; et la lecture de la deuxième information d'identification (66d, 67d) du deuxième objet (66, 67) à partir d'une deuxième lumière réfléchie acquise du deuxième objet (66, 67) non via l'unité de déflexion (710); dans lequel la deuxième lumière réfléchie entre dans le lecteur d'informations d'identification (700) sans passer par l'unité de déflexion (710), le premier objet est un premier râtelier ou un premier récipient, le deuxième objet est un deuxième râtelier ou un deuxième récipient, la première partie de placement (85) est un premier plateau, et la deuxième partie de placement (65) est un deuxième plateau.
